# EUROPEAN PATENT APPLICATION

(11) **EP 4 686 464 A1**
(43) Date of publication of application: **04.02.2026**
(21) Application number: 25192166.4
(22) Date of filing: 28.07.2025
(51) Int. Cl.: A61H 31/00

(54) **CARDIOPULMONARY RESUSCITATION DEVICE**

(30) Priority: 31.07.2024 CN 202411053593
(71) Applicant: Shenzhen Mindray Bio-Medical Electronics Co., Ltd., Shenzhen, Guangdong 518057 (CN)
(72) Inventor: WAN, Wenjie, Shenzhen, 518057 (CN); LIU, Huayong, Shenzhen, 518057 (CN); ZHAO, Pengshi, Shenzhen, 518057 (CN); YUAN, Bo, Shenzhen, 518057 (CN); NIE, Pengpeng, Shenzhen, 518057 (CN)
(74) Representative: KIPA AB

(57) **Abstract**

An embodiment provides a cardiopulmonary resuscitation device, including a motor assembly, a screw rod, a screw nut, a push-rod assembly, a first bearing, a guide sleeve, and a connection structure. The push-rod assembly includes a push-rod body and a compression structure The push-rod assembly has an initial retraction position, at which position, orthographic projections of the screw nut and the stator on a plane, which plane is parallel to an axial direction, at least partially overlaps with each other, and orthographic projections of the first bearing and the guide sleeve on a plane, which plane is parallel to the axial direction, at least partially overlaps with each other. Tis disclosure enables the cardiopulmonary resuscitation device to have a reduced dimension in the axial direction perpendicular to the screw rod, and a reduced dimension in the axial direction, which is conducive to an overall miniaturization of the cardiopulmonary resuscitation device.

## Description

### CROSS-REFERENCE TO RELATED APPLICATIONS

This disclosure claims priority to Chinese application No. 202411053593.8, filed on July 31, 2024, to Chinese Patent Office, titled "CARDIOPULMONARY RESUSCITATION DEVICE"; the contents of which are incorporated herein by reference in their entirety.

### TECHNICAL FIELD

The disclosure relates to the technical field of medical devices, and more particularly to a cardiopulmonary resuscitation device.

### BACKGROUND

Cardiopulmonary resuscitation device is a kind of device, that uses machinery instead of manpower to implement operation(s) for life support, such as a chest compression. Its main function is to control a compression structure to alternately implement compression and release operations on a chest bone of a patient.

In related technologies, a motor is arranged on a lateral side of a push-rod assembly (that is, being perpendicular to a movement direction of push-rod), and the motor and the push-rod are driven by a synchronous pulley assembly. This scheme has a series of problems, for example, the cardiopulmonary resuscitation device is large in volume, takes up a large space and is heavy, which is not conducive to being handled or carried inside a medical institution, outside a medical institution, or during transportation. Its dimension not only affects use experience of an operator dedicated to first aid, but also requires a certain operation space, when cooperating with other rescue measures during cardiopulmonary resuscitation. In addition, a power output of the motor needs to be transmitted by a synchronous pulley, resulting a low transmission efficiency. Moreover, the motor itself has obvious heating, which leads to poor heat dissipation performance of whole machine.

### SUMMARY

Based on technical problem(s) in the background technology, an embodiment of this disclosure provides an improved cardiopulmonary resuscitation device, so as to realize an overall miniaturization of the cardiopulmonary resuscitation device, while improving a transmission efficiency and heat dissipation performance.

An embodiment of this disclosure provides a cardiopulmonary resuscitation device, including:
a motor assembly, which includes a stator and a rotor, wherein the rotor has an annular structure and defines a hollow region, the stator is arranged on an outer periphery of the rotor;
a screw rod, which is coaxially arranged with the rotor;
a connection structure, which connects the rotor and the screw rod;
a screw nut, which is sleeved on an outer periphery of the screw rod and fits with the screw rod;
a push-rod assembly, which is configured to implement a chest compression on an object; wherein the push-rod assembly includes a push-rod body and a compression structure; wherein the compression structure is arranged at one end of the push-rod body, which end is away from the motor assembly; the other end of the push-rod body, which end is adjacent to the motor assembly, is connected with the screw nut; the push-rod body is sleeved on the outer periphery of the screw rod; wherein the rotor is configured to drive the screw rod to rotate through the connection structure, the screw rod is configured to drive the screw nut to move linearly along an axial direction while rotating, so as to drive the push-rod assembly to move linearly along the axial direction through the screw nut;
a first bearing, which is configured to simultaneously support a rotation of the rotor and a linear movement of the push-rod assembly, wherein the first bearing surrounds an outer periphery of the connection structure and is located on a side of the rotor, which side faces the compression structure, along the axial direction; and
a guide sleeve, which is configured to guide the push-rod assembly to move linearly along the axial direction, wherein the guide sleeve is sleeved on an outer periphery of the push-rod body;
the push-rod assembly has an initial retraction position; wherein at the initial retraction position, an orthographic projection of the screw nut on a plane, which plane is parallel to the axial direction, at least partially overlaps with an orthographic projection of the stator on said plane, and an orthographic projection of the first bearing on a plane, which plane is parallel to the axial direction, at least partially overlaps with an orthographic projection of the guide sleeve on said plane.

In an embodiment of this disclosure, the screw rod and the rotor are coaxially arranged, so as to enable the motor assembly to be arranged at one end of the screw rod along the axial direction, which is conducive to reducing a dimension of the cardiopulmonary resuscitation device in any direction(s) which is(are) perpendicular to the axial direction and improving a structural compactness of the cardiopulmonary resuscitation device. In addition, as at the initial retraction position, an orthographic projection of the screw nut on any one plane, which plane is parallel to the axial direction, at least partially overlaps with an orthographic projection of the stator on said plane, and an orthographic projection of the first bearing on any one plane, which plane is parallel to the axial direction, at least partially overlaps with an orthographic projection of the guide sleeve on said plane, which is conducive to reducing a dimension of the cardiopulmonary resuscitation device in the axial direction. That is, such that the cardiopulmonary resuscitation device is capable of having a reduced dimension in a direction which is perpendicular to the axial direction of the screw rod, and also capable of having a reduced dimension in the axial direction, which is conducive to an overall miniaturization of the cardiopulmonary resuscitation device. The rotor directly drives the screw rod to rotate through the connection structure, which is conducive to improving a utilization rate for kinetic energy of the motor and improving a transmission efficiency. Since no intermediate transmission element, such as a belt pulley, is required, heating is not too serious and a heat dissipation effect is better.

An embodiment of this disclosure provides a cardiopulmonary resuscitation device, including:
a motor assembly, which includes a stator and a rotor, wherein the rotor has an annular structure and defines a hollow region, the stator is arranged on an outer periphery of the rotor;
a screw rod, which is coaxially arranged with the rotor;
a screw nut, which is sleeved on an outer periphery of the screw rod and fits with the screw rod;
a push-rod assembly, which is configured to implement a chest compression on an object; wherein the push-rod assembly includes a push-rod body and a compression structure; wherein the compression structure is arranged at one end of the push-rod body, which end is away from the motor assembly; the other end of the push-rod body, which end is adjacent to the motor assembly, is connected with the screw nut; the push-rod body is sleeved on the outer periphery of the screw rod;
a connection structure, which connects the rotor and the screw rod; wherein the connection structure includes a connection end and a connection cylinder, the connection cylinder is hollow and is provided with an opening at one end of the connection cylinder, which end faces the compression structure, wherein the connection end is arranged at the other end of the connection cylinder, which end is away from the opening; the connection end penetrates through or is accommodated inside the hollow region of the rotor, one end of the screw rod, which end is adjacent to the rotor, penetrates through or is accommodated inside the connection end; wherein the rotor is configured to drive the screw rod to rotate through the connection structure, the screw rod is configured to drive the screw nut to move linearly along an axial direction while rotating, so as to drive the push-rod assembly to move linearly along the axial direction through the screw nut;
a guide sleeve, which is configured to guide the push-rod body to move linearly along the axial direction, wherein the guide sleeve is sleeved on an outer periphery of the push-rod body;
the push-rod assembly has an initial retraction position; wherein at the initial retraction position, the screw nut and the guide sleeve are inserted into the connection cylinder through the opening of the connection structure.

In an embodiment of this disclosure, the screw rod and the rotor are coaxially arranged, so as to enable the motor assembly to be arranged at one end of the screw rod along the axial direction, which is conducive to reducing a dimension of the cardiopulmonary resuscitation device in any direction(s) which is(are) perpendicular to the axial direction and improving a structural compactness of the cardiopulmonary resuscitation device. In addition, as at the initial retraction position, the screw nut and the guide sleeve are inserted into the connection cylinder through the opening of the connection structure, which is conducive to reducing a dimension of the cardiopulmonary resuscitation device in the axial direction of the screw rod. That is, such that the cardiopulmonary resuscitation device is capable of having a reduced dimension in a direction which is perpendicular to the axial direction, and also capable of having a reduced dimension in the axial direction, which is conducive to an overall miniaturization of the cardiopulmonary resuscitation device. The rotor directly drives the screw rod to rotate through the connection structure, which is conducive to improving a utilization rate for kinetic energy of the motor and improving a transmission efficiency. Since no intermediate transmission element, such as a belt pulley, is required, heating is not too serious and a heat dissipation effect is better.

In some embodiments, the cardiopulmonary resuscitation device further includes a first bearing, which is configured to simultaneously support a rotation of the rotor and a linear movement of the push-rod assembly, wherein the first bearing surrounds an outer periphery of the connection cylinder and is located on a side of the rotor, which side faces the compression structure, along the axial direction.

An embodiment of this disclosure provides a cardiopulmonary resuscitation device, including:
a motor assembly, which includes a stator and a rotor;
a screw rod, which is coaxially arranged with the rotor;
a connection structure, which connects the rotor and the screw rod;
a screw nut, which is sleeved on an outer periphery of the screw rod and fits with the screw rod;
a push-rod assembly, which is configured to implement a chest compression on an object; wherein the push-rod assembly includes a push-rod body and a compression structure; wherein the compression structure is arranged at one end of the push-rod body, which end is away from the motor assembly; the other end of the push-rod body, which end is adjacent to the motor assembly, is connected with the screw nut; the push-rod body is sleeved on the outer periphery of the screw rod; wherein the rotor is configured to drive the screw rod to rotate through the connection structure, the screw rod is configured to drive the screw nut to move linearly along an axial direction while rotating, so as to drive the push-rod assembly to move linearly along the axial direction through the screw nut;
a first bearing, which is configured to simultaneously support a rotation of the rotor and a linear movement of the push-rod assembly, wherein the first bearing surrounds an outer periphery of the connection structure and is located on a side of the rotor, which side faces the compression structure, along the axial direction; wherein the first bearing is provided with a first end surface on a side of the first bearing, which side faces the compression structure;
a guide sleeve, which is configured to guide the push-rod body to move linearly along the axial direction, wherein the guide sleeve is sleeved on an outer periphery of the push-rod body;
the push-rod assembly has an initial retraction position; wherein at the initial retraction position, at least a portion of the screw nut extends beyond the first end surface along the axial direction and away from the compression structure; and an orthographic projection of the first bearing on a plane, which plane is parallel to the axial direction, at least partially overlaps with an orthographic projection of the guide sleeve on said plane.

In an embodiment of this disclosure, the screw rod and the rotor are coaxially arranged, so as to enable the motor assembly to be arranged at one end of the screw rod along the axial direction, which is conducive to reducing a dimension of the cardiopulmonary resuscitation device in any direction(s) which is(are) perpendicular to the axial direction and improving a structural compactness of the cardiopulmonary resuscitation device. In addition, as at the initial retraction position, at least a portion of the screw nut extends beyond the first end surface along the axial direction and away from the compression structure, and an orthographic projection of the first bearing on any one plane, which plane is parallel to the axial direction, at least partially overlaps with an orthographic projection of the guide sleeve on said plane, which is conducive to reducing a dimension of the cardiopulmonary resuscitation device in the axial direction. That is, such that the cardiopulmonary resuscitation device is capable of having a reduced dimension in a direction which is perpendicular to the axial direction of the screw rod, and also capable of having a reduced dimension in the axial direction, which is conducive to an overall miniaturization of the cardiopulmonary resuscitation device. The rotor directly drives the screw rod to rotate through the connection structure, which is conducive to improving a utilization rate for kinetic energy of the motor and improving a transmission efficiency. Since no intermediate transmission element, such as a belt pulley, is required, heating is not too serious and a heat dissipation effect is better.

In some embodiments, the rotor has an annular structure and defines a hollow region, the stator is arranged on an outer periphery of the rotor.

In some embodiments, at the initial retraction position, an orthographic projection of the screw nut on a plane, which plane is parallel to the axial direction, at least partially overlaps with an orthographic projection of the stator on said plane; or at the initial retraction position, the screw nut is located on a side of the rotor, which side faces the compression structure, along the axial direction.

In some embodiments, an end of the screw rod on a side of the screw rod, which side is adjacent to the motor assembly, penetrates through or is accommodated inside the hollow region of the rotor along the axial direction.

In some embodiments, a portion of the connection structure penetrates through or is accommodated inside the hollow region of the rotor.

In some embodiments, the connection structure includes a connection end and a connection cylinder, wherein the connection cylinder is provided with an opening at one end of the connection cylinder, which end faces the compression structure, wherein the connection end is arranged at the other end of the connection cylinder, which end is away from the opening; the connection end penetrates through or is accommodated inside the hollow region of the rotor, one end of the screw rod, which end is adjacent to the rotor, penetrates through or is accommodated inside the connection end;
at the initial retraction position, the screw nut and the guide sleeve are inserted into the connection cylinder through the opening of the connection structure.

In some embodiments, the motor assembly further includes a housing, wherein the stator and the rotor are arranged inside the housing;
the first bearing is arranged outside the housing and located on a side of the housing, which side faces the compression structure, along the axial direction; or the first bearing is at least partially arranged inside the housing, and is arranged between the connection structure and the housing along the axial direction.

In some embodiments, the first bearing is provided with a first end surface on a side of the first bearing, which side faces the compression structure; wherein at the initial retraction position, at least a portion of the screw nut extends beyond the first end surface along the axial direction and away from the compression structure.

In some embodiments, at the initial retraction position, orthographic projections of the screw nut, the first bearing and the guide sleeve on a plane, which plane is parallel to the axial direction, at least partially overlap with one another; or
the first bearing is provided with a second end surface on a side of the first bearing, which side is away from the compression structure; wherein at the initial retraction position, the screw nut entirely extends beyond the second end surface along the axial direction and away from the compression structure.

In some embodiments, the motor assembly further includes a housing, wherein the stator and the rotor are arranged inside the housing;
the screw nut is arranged outside the housing and located on a side of the housing, which side faces the compression structure, along the axial direction; or the screw nut is at least partially arranged inside the housing.

In some embodiments, the cardiopulmonary resuscitation device further includes a sleeve, which is sleeved on an outer periphery of the guide sleeve and fixed relative to the stator; wherein the push-rod body is at least partially located inside the sleeve; an orthographic projection of the first bearing on a plane, which plane is parallel to the axial direction, at least partially overlaps with an orthographic projection of the sleeve on said plane.

In some embodiments, the cardiopulmonary resuscitation device further includes a sleeve, which is sleeved on an outer periphery of the guide sleeve and fixed relative to the stator; wherein the push-rod body is at least partially located inside the sleeve; wherein the sleeve is inserted into the connection cylinder through the opening of the connection structure.

In some embodiments, the cardiopulmonary resuscitation device further includes a sleeve, which is sleeved on an outer periphery of the guide sleeve and fixed relative to the stator; wherein the push-rod body is at least partially located inside the sleeve.

In some embodiments, the guide sleeve is at least partially located inside the sleeve at the initial retraction position;
the push-rod assembly is further provided with an extreme extension position, at which position, the guide sleeve partially extends out of the sleeve.

In some embodiments, an anti-rotation structure is respectively arranged between the push-rod body and the guide sleeve, and between the guide sleeve and the sleeve; wherein the guide sleeve is capable of moving linearly along the axial direction relative to the sleeve.

In some embodiments, the guide sleeve is in movable connection with the push-rod assembly, so as to enable the guide sleeve to move linearly relative to the push-rod assembly along the axial direction.

In some embodiments, the guide sleeve is provided with a first blocking structure and a second blocking structure; wherein the first blocking structure is located on a side of the second blocking structure, which side is adjacent to the compression structure, along the axial direction;
the cardiopulmonary resuscitation device further includes a connection element, which is arranged on an outer periphery of the push-rod assembly and extends into a gap region between the first blocking structure and the second blocking structure, wherein the connection element is capable of moving linearly inside the gap region along the axial direction.

In some embodiments, a side wall of the guide sleeve is provided with a guide groove, which extends along the axial direction; wherein the connection element extends into the guide groove, and is capable of moving linearly inside the guide groove along the axial direction;
wherein, a groove wall of the guide groove on a side of the guide groove, which side is adjacent to the compression structure, forms at least a portion of the first blocking structure; a groove wall of the guide groove on a side of the guide groove, which side is away from the compression structure, forms at least a portion of the second blocking structure.

In some embodiments, at the initial retraction position, the second blocking structure abuts against a side of the connection element, which side is away from the compression structure, along the axial direction, so as to enable the connection element to hold at least a portion of a weight of the guide sleeve.

In some embodiments, an outer periphery surface of the guide sleeve is provided with a first position-limiting structure; wherein the cardiopulmonary resuscitation device further includes a second position-limiting structure, which fits with the first position-limiting structure; wherein the first position-limiting structure and the second position-limiting structure are configured to limit a distance of a linear movement, along the axial direction, of the guide sleeve inside the sleeve toward a side, which side is adjacent to the compression structure.

In some embodiments, the first position-limiting structure is a step surface, which is formed on the outer periphery surface of the guide sleeve and located on a side of the guide sleeve, which side is adjacent to the compression structure; the second position-limiting structure is a convex structure, which protrudes inward from an inner periphery surface of the sleeve along a radial direction.

In some embodiments, the first position-limiting structure is a step surface, which is formed on the outer periphery surface of the guide sleeve and located on a side of the guide sleeve, which side is adjacent to the compression structure; wherein the cardiopulmonary resuscitation device further includes an end cap, which is arranged at one end of the sleeve, which end is adjacent to the compression structure; wherein the push-rod body penetrates through the end cap, and the second position-limiting structure is a convex structure, which protrudes inward from an inner periphery surface of the end cap along a radial direction.

In some embodiments, the motor assembly further includes a housing, wherein the sleeve and the housing together form an integral structure.

In some embodiments, the motor assembly is located at one end of the sleeve, which end is away from the compression structure, along the axial direction; wherein the motor assembly further includes a housing; the sleeve is arranged entirely outside the housing and located on a side of the housing, which side faces the compression structure, along the axial direction.

In some embodiments, the motor assembly further includes a housing, and a portion of the sleeve is arranged inside the housing;
an orthographic projection of the sleeve on a plane, which plane is parallel to the axial direction, at least partially overlaps with an orthographic projection of the rotor on said plane; or the sleeve is entirely located on a side of the rotor, which side faces the compression structure, along the axial direction.

In some embodiments, the cardiopulmonary resuscitation device further includes a sleeve, which is sleeved on an outer periphery of the guide sleeve and fixed relative to the stator; wherein the push-rod body is at least partially located inside the sleeve;
a flange is arranged on an outer periphery of one end of the sleeve, which end is adjacent to the motor assembly, and the flange extends outward along a radial direction;
the motor assembly further includes a housing, wherein the flange is arranged outside the housing and located on a side of the housing, which side faces the compression structure, along the axial direction;
the housing is directly or indirectly connected with the flange.

In some embodiments, the first bearing is arranged outside the housing and located on the side of the housing, which side faces the compression structure, along the axial direction; wherein the first bearing is arranged between the housing and the flange along the axial direction.

In some embodiments, the cardiopulmonary resuscitation device further includes a connection column, which is connected with the housing, wherein the connection column extends from the side of the housing, which side faces the compression structure, along the axial direction; wherein the connection column is connected with the housing and the flange.

In some embodiments, the cardiopulmonary resuscitation device further includes a bearing seat, wherein the first bearing is arranged at the bearing seat;
the cardiopulmonary resuscitation device further includes a connection column, which is connected with the housing, wherein the connection column extends from the side of the housing, which side faces the compression structure, along the axial direction; wherein the connection column is connected with the housing and the bearing seat.

In some embodiments, the first bearing includes a bearing seat, the first bearing is arranged at the bearing seat, wherein the bearing seat is directly connected with the flange and the housing.

In some embodiments, the housing is directly connected with the flange, wherein the first bearing is arranged inside the housing, and is arranged between the housing and the connection structure along a radial direction.

In some embodiments, the rotor and the connection structure together form an integral structure, or the rotor and the connection structure are separated structures.

In some embodiments, the cardiopulmonary resuscitation device further includes a detection structure, which is configured to detect a rotation angle of at least one of the rotor, the connection structure and the screw rod.

In some embodiments, the detection structure is at least partially located on an inner side of the stator along a radial direction; the detection structure is sleeved on an outer periphery of the connection structure; or the detection structure is located on a side of the stator, which side is away from the compression structure, along the axial direction.

In some embodiments, the cardiopulmonary resuscitation device further includes a second bearing, which is arranged on an outer periphery of the connection structure or an outer periphery of one end of the screw rod, which end is adjacent to the motor assembly; wherein the second bearing is located on a side of the rotor, which side is away from the first bearing, along the axial direction; wherein the first bearing and the second bearing are coaxially arranged with each other.

### BRIEF DESCRIPTION OF THE DRAWINGS

FIG. 1 is a structural diagram of a cardiopulmonary resuscitation device according to an embodiment of this disclosure, wherein a push-rod assembly is at an initial retraction position.
FIG. 2 is a partial decomposition diagram of a structure shown in FIG. 1.
FIG. 3 is a further decomposition diagram of a structure shown in FIG. 2.
FIG. 4 is a diagram of a push-rod assembly in FIG. 1, when the push-rod assembly is at an extreme extension position.
FIG. 5 is a sectional view of a structure shown in FIG. 1 on a first section plane, wherein the first section plane penetrates through a centreline of a screw rod, a first position-limiting structure, and a second position-limiting structure.
FIG. 6 is a sectional view of a structure shown in FIG. 1 on a second section plane, wherein the second section plane penetrates through a centreline of a screw rod, and a connection element.
FIG. 7 is a diagram, when a push-rod assembly and a guide sleeve move, relative to a sleeve, to an extreme position of an axial movement of the guide sleeve, in a perspective shown in FIG. 6.
FIG. 8 is an exploded view of a structure of a perspective shown in FIG. 7.
FIG. 9 is a diagram, when a push-rod assembly moves to an extreme extension position, in a perspective shown in FIG. 5.
FIG. 10 is a diagram, when a push-rod assembly moves to an extreme extension position, in a perspective shown in FIG. 6.
FIG. 11 is a sectional view of a cardiopulmonary resuscitation device according to a second embodiment of this disclosure.
FIG. 12 is a diagram, when a push-rod assembly moves to an extreme extension position in a structure of a perspective shown in FIG. 11.
FIG. 13 is a sectional view of a partial structure of a cardiopulmonary resuscitation device according to a third embodiment of this disclosure.
FIG. 14 is a diagram, when a push-rod assembly moves to an extreme extension position in a structure of a perspective shown in FIG. 13.

Description of Reference numbers.
10. Motor assembly; 11. Rotor; 12. Stator; 13. Housing; 20. Push-rod assembly; 21. Push-rod body; 22. Compression structure; 23. Connection element; 30. Screw rod; 35. Screw nut; 40. Connection structure; 41. Connection cylinder; 41a. Opening; 42. Connection end; 50. Sleeve; 51. Flange; 52. Second position-limiting structure; 53. End cap; 54. Connection column; 60. Guide sleeve; 60a. Guide groove; 61. First blocking structure; 62. Second blocking structure; 63. First position-limiting structure; 64. Avoidance structure; 71. First bearing; 71a. First end surface; 71b. Second end surface; 72. Bearing seat; 73. Second bearing; 80. Detection structure.

### DESCRIPTION OF THE PREFERRED EMBODIMENTS

In order to further clarify the purpose, technical solution, and advantages of this disclosure, the following provides a detailed explanation of this disclosure in conjunction with the accompanying drawings and embodiments. It should be understood that the specific embodiments described herein are only used to explain this disclosure and are not intended to limit this disclosure.

The various specific technical features described in the specific embodiments can be combined in any suitable way without contradiction, such as forming different embodiments and technical solutions through the combination of different specific technical features. In order to avoid unnecessary repetition, various possible combinations of specific technical features in this disclosure are not separately described.

In the following description, the terms "first\second\..." only distinguish different objects and do not imply similarities or connections between them. It should be understood that orientation descriptions "above", "below", "outside", and "inside" are all directions in normal use, and "left" and "right" directions represent the left and right directions indicated in the corresponding diagram, which can be the left and right directions in normal use or not.

It should be noted that the terms "including", "containing", or any other variation thereof are intended to encompass non-exclusive inclusion, such that a process, method, article, or device that includes a series of elements not only includes those elements, but further includes other elements that are not explicitly listed or are inherent to such a process, method, article, or device. Without further limitations, the element defined by the statement "including a..." does not exclude the existence of other identical elements in the process, method, article, or device that includes that element. "Multiple" means greater than or equal to two.

This disclosure provides a cardiopulmonary resuscitation device of various embodiments. Based on an idea for improving a transmission efficiency and heat dissipation performance of the cardiopulmonary resuscitation device, as well as a structural compactness with reduced dimension(s) in an axial direction and any direction perpendicular to the axial direction, through a reasonable layout of a screw rod 30, a rotor 11, a first bearing 71, a guide sleeve 60, a sleeve 50 and other structures, a motor assembly 10 is capable of being arranged at one end of the screw rod 30 along an axial direction, a space utilization along a radial direction of the screw rod 30 is higher, which is conducive to reducing dimensions of the cardiopulmonary resuscitation device in all directions which are perpendicular to the axial direction (that is, the radial direction of the screw rod 30), as well as conducive to improving a structural compactness of the cardiopulmonary resuscitation device. In addition, in an initial contraction state, as the screw nut 35 is capable of penetrating through the first bearing 71 and/or entering into an interior of the motor assembly 10, the push-rod assembly 20 has a high utilization rate for a compression height, which is also conducive to reducing an axial dimension of the cardiopulmonary resuscitation device at an initial retraction position, that is, the cardiopulmonary resuscitation device is capable of having a reduced dimension in all directions which are perpendicular to the axial direction of the screw rod 30, and is also capable of having a reduced dimension in the axial direction, which is conducive to realizing an overall miniaturization of the cardiopulmonary resuscitation device. Moreover, the rotor directly drives the screw rod 30 to rotate through the connection structure, which is conducive to improving a utilization rate for kinetic energy of the motor and improving a transmission efficiency. Since no intermediate transmission element, such as a belt pulley, is required, heating is not too serious and a heat dissipation effect is better.

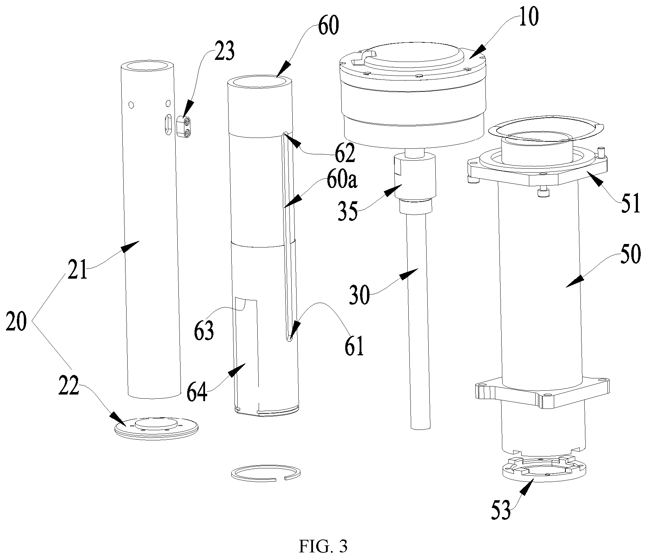

An embodiment of this disclosure provides a cardiopulmonary resuscitation device, refer to FIG. 3, FIG. 5, FIG. 11 and FIG. 13, including a motor assembly 10, a screw rod 30, a connection structure 40, a screw nut 35 and a push-rod assembly 20.

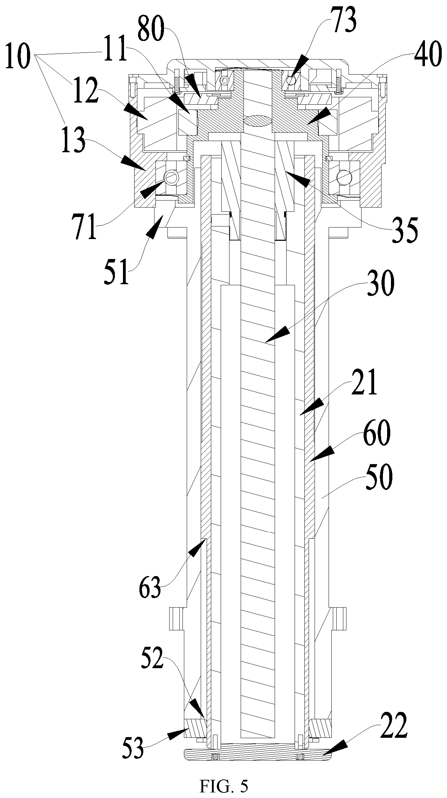

Referring to FIG. 5, the motor assembly 10 includes a stator 12 and a rotor 11, and the stator 12 is arranged on an outer periphery of the rotor 11. That is, the motor assembly 10 is an inner rotor motor. The rotor 11 has an annular structure and defines a hollow region, which region is surrounded by the annular structure.

The screw rod 30 and the rotor 11 are coaxially arranged. A rotation axis of the screw rod 30 and a rotation axis of the rotor 11 roughly overlap with each other, and both rotate around a same axis. That is, the motor assembly 10 and the screw rod 30 are coaxially arranged.

The connection structure 40 is connected with the rotor 11 and the screw rod 30. The rotor 11 drives the screw rod 30 to rotate through the connection structure 40.

It should be noted that a connection relationship between the connection structure 40, the screw rod 30 and the rotor 11 is not limited. For example, the connection structure 40 and the rotor 11 can be an integrated structure, that is, the connection structure 40 and the rotor 11 are manufactured together as one part. The connection structure 40 and the screw rod 30 can also be an integrated structure, that is, the screw rod 30 and the connection structure 40 are manufactured together as one part. Alternatively, as an independent component, the connection structure 40 is connected with the rotor 11 by welding, bonding, screw connection, etc., and the connection structure 40 is connected with the screw rod 30 by welding, bonding, screw connection, etc. In short, the connection structure 40 is capable of transmitting a torque of the rotor 11 to the screw rod 30.

The screw nut 35 is sleeved on an outer periphery of the screw rod 30 and fits with the screw rod 30. When the screw rod 30 rotates, the screw nut 35 does not rotate, and under an action of the screw rod 30, the screw nut 35 moves linearly along an axial direction of the screw rod 30. For example, when the screw rod 30 rotates forward, the screw nut 35 moves linearly toward the compression structure 22, and when the screw rod 30 rotates backward, the screw nut 35 moves linearly away from the compression structure 22. It should be noted that forward rotation and backward rotation are only used to express that the two directions are opposite, and do not specifically refer to specific directions.

There is no limit to a type of fitting between the screw rod 30 and the screw nut 35, for example, it can be a thread-fitting or a ball-fitting. Of course, the screw rod 30 and the screw nut 35 can also be other types of fitting, and there are no restrictions here.

The push-rod assembly 20 is configured to implement a chest compression on an object. The push-rod assembly 20 includes a push-rod body 21 and a compression structure 22, wherein the compression structure 22 is arranged at one end of the push-rod body 21, which end is away from the motor assembly 10. The push-rod assembly 20 acts on a chest of the object through the compression structure 22.

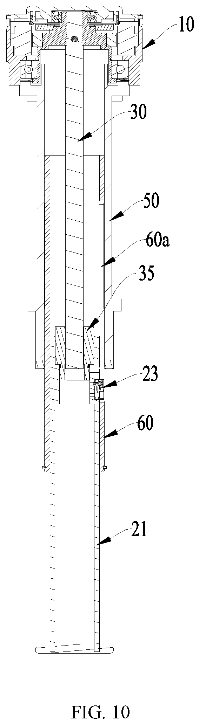

Refer to FIGS. 5 to 7 and 9 to 14. The other end of the push-rod body 21, which end is adjacent to the motor assembly 10, is connected with the screw nut 35, and the push-rod body 21 is sleeved on the outer periphery of the screw rod 30. The rotor 11 drives the screw rod 30 to rotate through the connection structure 40. The screw rod 30 is configured to drive the screw nut 35 to move linearly along the axial direction while rotating, so as to drive the push-rod assembly 20 to move linearly along the axial direction through the screw nut 35.

For example, when the rotor 11 of the motor assembly 10 rotates forward, and the screw rod 30 is driven to rotate forward through the connection structure 40. When the screw rod 30 rotates forward, it drives the screw nut 35 to move linearly toward the compression structure 22 (that is, a direction away from the rotor 11). The screw nut 35 drives the push-rod body 21 to move synchronously, and the push-rod body 21 drives the compression structure 22 to move toward the patient, so as to perform a chest compression on chest of a patient. After that, the rotor 11 rotates backward and drives the screw rod 30 to rotate backward through the connection structure 40. When the screw rod 30 rotates backward, it drives the screw nut 35 to move linearly away from the compression structure 22 (that is, a direction which is toward the rotor 11). The screw nut 35 drives the push-rod body 21 to move synchronously. The push-rod body 21 drives the compression structure 22 to move away from the patient, and the compression structure 22 releases the chest of patient. The rotor 11 alternately rotates forward and backward, so as to enable the compression structure 22 to alternately compress and release the patient.

In this embodiment, the push-rod body 21 and the screw nut 35 are two independent elements, so only portions of the screw nut 35 and the screw rod 30, which portions fit with each other, need to be processed, and there is no need to further process the push-rod body 21 for fitting with the screw rod 30 (for example, a thread processed on the push-rod body 21 to fit with the screw rod 30). That is to say, the structure of the push-rod body 21 in the embodiment of this disclosure does not need special customization, which reduces a processing cost and a processing period of the push-rod body 21, and is conducive to reducing a cost of cardiopulmonary resuscitation device. In some related technologies, a thread is processed on the push-rod body, and the push-rod body fits with the screw rod (that is, the screw nut in the embodiment of this disclosure is canceled). Because the screw rod and the thread need to transmit a torque, therefore, the push-rod body needs to select a metal material with a higher requirement, and the thread needs to be processed on the push-rod body. This is difficult to process, and also needs to customize special tools for processing, which is not only costly, but the processing technology is also difficult to be realized.

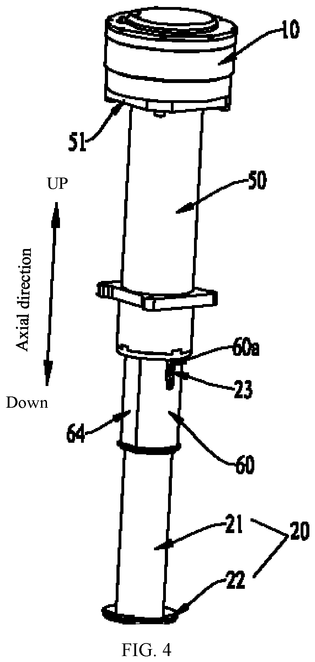

In some embodiments, when the cardiopulmonary resuscitation device is in use, the screw rod 30 and the push-rod body 21 are roughly arranged along a vertical direction, and the motor assembly 10 is located above the push-rod body 21. The vertical direction can be understood as an up-down direction in FIG. 4.

The cardiopulmonary resuscitation device further includes a first bearing 71, which is configured to simultaneously support a rotation of the rotor 11 and a linear movement of the push-rod assembly 20. The first bearing 71 surrounds an outer periphery of the connection structure 40 and is located on a side of the rotor 11, which side faces the compression structure 22, along the axial direction. On the one hand, the first bearing 71 has a function of radial positioning for the connection structure 40, which improves smooth and stability of the rotation of the connection structure 40. On the other hand, the first bearing 71 also holds a gravity of the connection structure 40 and its load, and provides support in a direction of gravity for the connection structure 40 and its load. Specifically, since the connection structure 40 is connected with the rotor 11, while the first bearing 71 supports the connection structure 40, the first bearing 71 realizes axial and radial support of the rotor 11 through the connection structure 40, so as to maintain a radial positioning and axial support of the rotor 11. In addition, weights of the screw rod 30 and the push-rod assembly 20 are supported by the connection structure 40. Therefore, the first bearing 71 realizes axial support and radial positioning of the screw rod 30 and the push-rod assembly 20 through the connection structure 40.

Referring to FIGS. 5 to 14, the cardiopulmonary resuscitation device further includes a guide sleeve 60, which is configured to guide the push-rod assembly 20 to move linearly along the axial direction. The guide sleeve 60 is sleeved on an outer periphery of the push-rod body 21, that is, the push-rod body 21 and the guide sleeve 60 are embedded Structures. The guide sleeve 60 is beneficial to improving a movement reliability and stability of the push-rod assembly 20.

Refer to FIGS. 5, 6 and 13. The push-rod assembly 20 has an initial retraction position. At the initial retraction position, an orthographic projection of the screw nut 35 on a plane, which plane is parallel to the axial direction, at least partially overlaps with an orthographic projection of the stator 12 on said plane. That is, at the initial retraction position, the screw nut 35 and the screw rod 30 can both extend into the motor assembly 10. In the embodiment of this disclosure, Due to the hollow shape of the stator 12 and the rotor 11, and the stator 12 surrounding the outer periphery of the rotor 11, an overall structure composed of the stator 12 and the rotor 11 occupies less space in the axial direction. In addition, the screw nut 35 and the screw rod 30 can make full use of the hollow space of the stator 12, which is conducive to further reducing the axial dimension of the cardiopulmonary resuscitation device. Moreover, an orthographic projection of the first bearing 71 on a plane, which plane is parallel to the axial direction, at least partially overlaps with an orthographic projection of the guide sleeve 60 on said plane. It should be noted that since the first bearing 71 is sleeved on the outer periphery of the connection structure 40, and the connection structure 40 and the first bearing 71 do not move relatively in the axial direction; accordingly at the initial retraction position, one end of the guide sleeve 60 extends into an interior of the connection structure 40. In this way, an internal space of the connection structure 40 can be fully utilized, which is conducive to reducing the axial dimension of the cardiopulmonary resuscitation device.

The initial retraction position refers to an extreme position of a product design, when the push-rod assembly 20 moves to a side which side is adjacent to the motor assembly 10. When the cardiopulmonary resuscitation device is not in use, for example, when in fields such as leaving the factory, being transporting, storing and so on, the push-rod assembly 20 is at the initial retraction position. Therefore, when the push-rod assembly 20 is at the initial retraction position, relative position relationship(s) between each component determine(s) an overall appearance dimension of the cardiopulmonary resuscitation device.

In an embodiment of this disclosure, the screw rod 30 and the rotor 11 are coaxially arranged, so as to enable the motor assembly 10 to be arranged at one end of the screw rod 30 along the axial direction. The space utilization rate along the radial direction of the screw rod 30 is higher, which is conducive to reducing dimension(s) of the cardiopulmonary resuscitation device in all directions perpendicular to the axial direction (that is, the radial direction of the screw rod 30), and is conducive to improving a structural compactness of the cardiopulmonary resuscitation device. In addition, since at the initial retraction position, an orthographic projection of the screw nut 35 on a plane, which plane is parallel to the axial direction, at least partially overlaps with an orthographic projection of the stator 12 on said plane, and an orthographic projection of the first bearing 71 on a plane, which plane is parallel to the axial direction, at least partially overlaps with an orthographic projection of the guide sleeve 60 on said plane, which is conducive to reducing a dimension of the cardiopulmonary resuscitation device in the axial direction. Due to the hollow shape of the stator 12 and the rotor 11, and the stator 12 surrounding the outer periphery of the rotor 11, the screw nut 35 is capable of penetrating through the first bearing 71 and entering into an interior of the motor assembly 10, and the push-rod assembly 20 has a high utilization rate for a compression height. In other words, the cardiopulmonary resuscitation device can have a reduced dimension in all directions perpendicular to the axial direction of the screw rod 30, and can also have a reduced dimension in the axial direction, which is conducive to an overall miniaturization of the cardiopulmonary resuscitation device.

In the embodiment of this disclosure, the rotor 11 directly drives the screw rod 30 to rotate through the connection structure, which is conducive to improving a utilization rate for kinetic energy of the motor and improving a transmission efficiency. Since no intermediate transmission element, such as a belt pulley, is required, heating is not too serious and a heat dissipation effect is better.

It should be noted that in the embodiment of this disclosure, the axial direction of the first bearing 71, the axial direction of the rotor 11, the axial direction of the screw rod 30, and the axial direction of the cardiopulmonary resuscitation device, refer to a same direction.

Based on the compact technical concept of cardiopulmonary resuscitation device, the embodiment of this disclosure further provides a cardiopulmonary resuscitation device. Refer to FIGS. 3, 5, 11 and 13, the cardiopulmonary resuscitation device includes a motor assembly 10, a screw rod 30, a connection structure 40, a screw nut 35 and a push-rod assembly 20.

The motor assembly 10 includes a stator 12 and a rotor 11. The rotor 11 has an annular structure and defines a hollow region. The stator 12 is arranged on an outer periphery of the rotor 11.

The screw rod 30 is coaxially arranged with the rotor 11. The structures of the screw rod 30 and the rotor 11 can adopt the structures of the screw rod 30 and the rotor 11 of any of the above and following embodiments of this disclosure, and will not be repeated here.

The screw nut 35 is sleeved on an outer periphery of the screw rod 30 and fits with the screw rod 30.

The push-rod assembly 20 is configured to implement a chest compression on an object. The push-rod assembly 20 includes a push-rod body 21 and a compression structure 22; wherein the compression structure 22 is arranged at one end of the push-rod body 21, which end is away from the motor assembly 10. The other end of the push-rod body 21, which end is adjacent to the motor assembly 10, is connected with the screw nut 35, and the push-rod body 21 is sleeved on the outer periphery of the screw rod 30.

The structures of the screw nut 35 and the push-rod assembly 20 can adopt structures of the screw nut 35 and the push-rod assembly 20 of any of the above and following embodiments, and will not be repeated here.

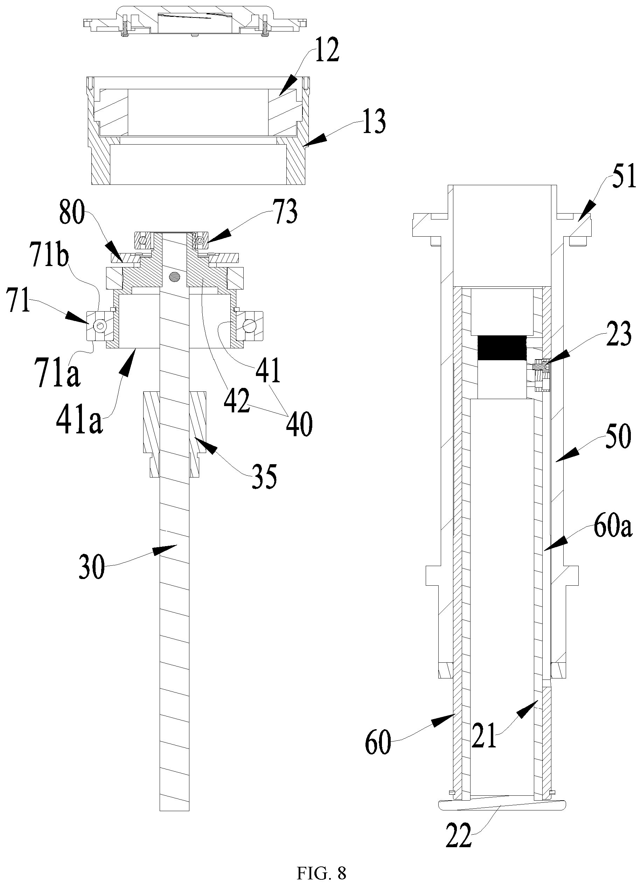

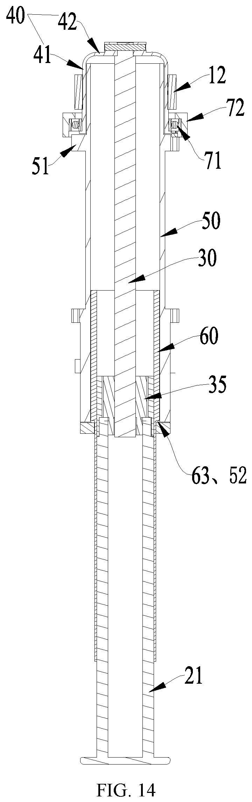

The connection structure 40 connects the rotor 11 and the screw rod 30. Referring to FIGS. 8 and 14, the connection structure 40 includes a connection end 42 and a connection cylinder 41. The connection cylinder 41 is hollow and is provided with an opening 41a at one end of the connection cylinder, which end faces the compression structure 22. The connection end 42 is arranged at one end of the connection cylinder 41, which end is away from the opening 41a. Referring to FIGS. 5 to 14, the connection end 42 penetrates through or is accommodated inside the hollow region of the rotor 11. One end of the screw rod 30, which end is adjacent to the rotor 11, penetrates through or is accommodated inside the connection end 42. The rotor 11 is configured to drive the screw rod 30 to rotate through the connection structure 40. The screw rod 30 is configured to drive the screw nut 35 to move linearly along an axial direction while rotating, so as to drive the push-rod assembly 20 to move linearly along the axial direction through the screw nut 35.

The connection end 42 penetrating through the hollow region of the rotor 11, means that the connection end 42 extends beyond an end surface of the rotor 11, which end surface is away from the push-rod assembly 20, along the axial direction and away from the push-rod assembly 20. The connection end 42 being accommodated inside the hollow region of the rotor 11, means that the connection end 42 extends into the hollow region, and the connection end 42 does not extend beyond an end surface of the rotor 11, which end surface is away from the push-rod assembly 20.

One end of the screw rod 30, which end is adjacent to the rotor 11, penetrating through the connection end 42, means that, an end of the screw rod 30 extends beyond an end face of the connection end 42, which end face is away from the connection cylinder 41. One end of the screw rod 30, which end is adjacent to the rotor 11, being accommodated inside the connection end 42, means that an end of the screw rod 30 extends into the connection end 42 and does not extend beyond an end face of one end of the connection end 42, which end surface is away from the connection cylinder 41.

The guide sleeve 60 is configured to guide the push-rod body 21 to move linearly along the axial direction, and the guide sleeve 60 is sleeved on an outer periphery of the push-rod body 21. The guide sleeve 60 is beneficial to improving a movement reliability and stability of the push-rod assembly 20.

Referring to FIG. 5, FIG. 6, FIG. 11 and FIG. 13, the push-rod assembly 20 has an initial retraction position; wherein at the initial retraction position, the screw nut 35 and the guide sleeve 60 are inserted into the connection cylinder 41 through the opening 41a of the connection structure 40.

In the embodiment of this disclosure, the screw rod 30 and the rotor 11 are coaxially arranged, so as to enable the motor assembly 10 to be arranged at one end of the screw rod 30 along the axial direction. The space utilization rate along the radial direction of the screw rod 30 is higher, which is conducive to reducing dimension(s) of the cardiopulmonary resuscitation device in all directions perpendicular to the axial direction (that is, the radial direction of the screw rod 30), and is conducive to improving a structural compactness of the cardiopulmonary resuscitation device. In addition, since at the initial retraction position, the screw nut 35 and the guide sleeve 60 are inserted into the connection cylinder 41 through the opening 41a of the connection structure 40, which is conducive to reducing an axial dimension of the cardiopulmonary resuscitation device, that is, such that the cardiopulmonary resuscitation device is capable of having reduced dimensions in all directions perpendicular to the axial direction, and also having a reduced dimension in the axial direction, which is conducive to realizing an overall miniaturization of the cardiopulmonary resuscitation device.

In an embodiment of this disclosure, the rotor 11 directly drives the screw rod 30 to rotate through the connection structure, which is conducive to improving a utilization rate for kinetic energy of the motor and improving a transmission efficiency. Since no intermediate transmission element, such as a belt pulley, is required, heating is not too serious and a heat dissipation effect is better.

For example, the cardiopulmonary resuscitation device further includes a first bearing 71, which is configured to simultaneously support a rotation of the rotor 11 and a linear movement of the push-rod assembly 20. The first bearing 71 surrounds an outer periphery of the connection cylinder 41 and is located on a side of the rotor 11, which side faces the compression structure 22, along the axial direction.

The supporting principle and function of the first bearing 71 on the rotor 11 and the push-rod assembly 20 can be seen from the principle and function of the first bearing 71 in the above and the following embodiments, and will not be repeated here.

Based on the compact technical concept of cardiopulmonary resuscitation device, the embodiment of this disclosure also provides another cardiopulmonary resuscitation device. Refer to FIGS. 3, 5, 11 and 13, the cardiopulmonary resuscitation device includes a motor assembly 10, a screw rod 30, a connection structure 40, a screw nut 35, a guide sleeve 60 and a push-rod assembly 20.

The motor assembly 10 includes a stator 12 and a rotor 11.

The screw rod 30 is coaxially arranged with the rotor 11.

The connection structure 40 connects the rotor 11 and the screw rod 30. The structures of the screw rod 30 and the rotor 11 can adopt the structures of the screw rod 30 and the rotor 11 of any of the above and following embodiments, and will not be repeated here.

The screw nut 35 is sleeved on an outer periphery of the screw rod 30 and fits with the screw rod 30.

The push-rod assembly 20 is configured to implement a chest compression on an object. The push-rod assembly 20 includes a push-rod body 21 and a compression structure 22, wherein the compression structure 22 is arranged at one end of the push-rod body 21, which end is away from the motor assembly 10. The other end of the push-rod body 21, which end is adjacent to the motor assembly 10, is connected with the screw nut 35, and the push-rod body 21 is sleeved on the outer periphery of the screw rod 30. The rotor 11 is configured to drive the screw rod 30 to rotate through the connection structure 40. The screw rod 30 is configured to drive the screw nut 35 to move linearly along an axial direction while rotating, so as to drive the push-rod assembly 20 to move linearly along the axial direction through the screw nut 35.

The structure of the screw nut 35 and the push-rod assembly 20 can adopt the structures of the screw nut 35 and the push-rod assembly 20 of any of the above and following embodiments, and will not be repeated here.

The first bearing 71 is configured to simultaneously support a rotation of the rotor 11 and a linear movement of the push-rod assembly 20. The first bearing 71 surrounds an outer periphery of the connection structure 40 and is located on a side of the rotor 11, which side faces the compression structure 22, along the axial direction. The supporting principle and function of the first bearing 71 on the rotor 11 and the push-rod assembly 20 can be seen from the principle and function of the first bearing 71 in the above and the following embodiments, and will not be repeated here.

The first bearing 71 is provided with a first end surface 71a on a side of the first bearing, which side faces the compression structure 22.

The guide sleeve 60 is configured to guide the push-rod body 21 to move linearly along the axial direction, wherein the guide sleeve 60 is sleeved on an outer periphery of the push-rod body 21. The guide sleeve 60 is beneficial to improving a movement reliability and stability of the push-rod assembly 20.

Refer to FIG. 5, FIG. 6, FIG. 11 and FIG. 13. The push-rod assembly 20 has an initial retraction position. At the initial retraction position, at least a portion of the screw nut 35 extends beyond the first end surface 71a in along the axial direction and away from the compression structure 22, and an orthographic projection of the first bearing 71 on a plane, which plane is parallel to the axial direction, at least partially overlaps with an orthographic projection of the guide sleeve 60 on said plane.

In the embodiment of this disclosure, the screw rod 30 and the rotor 11 are coaxially arranged, so as to enable the motor assembly 10 to be arranged at one end of the screw rod 30 along the axial direction. The space utilization rate along the radial direction of the screw rod 30 is higher, which is conducive to reducing dimensions of the cardiopulmonary resuscitation device in all directions perpendicular to the axial direction of the screw rod 30 (that is, the radial direction of the screw rod 30), and is conducive to improving a structural compactness of the cardiopulmonary resuscitation device. In addition, since at the initial retraction position, at least a portion of the screw nut 35 extends beyond the first end surface 71a along the axial direction and away from the compression structure 22, and an orthographic projection of the first bearing 71 on a plane, which plane is parallel to the axial direction, at least partially overlaps with an orthographic projection of the guide sleeve 60 on said plane, which is conducive to reducing a dimension of the cardiopulmonary resuscitation device in the axial direction, that is, such that the cardiopulmonary resuscitation device is capable of having reduced dimensions in all directions perpendicular to the axial direction of the screw rod 30, and also having a reduced dimensions in the axial direction, which is conducive to realizing an overall miniaturization of the cardiopulmonary resuscitation device.

In the embodiment of this disclosure, the rotor 11 directly drives the screw rod 30 to rotate through the connection structure, which is conducive to improving a utilization rate for kinetic energy of the motor and improving a transmission efficiency. Since no intermediate transmission element, such as a belt pulley, is required, heating is not too serious and a heat dissipation effect is better.

For example, the rotor 11 has an annular structure and defines a hollow region, and the stator 12 is arranged on an outer periphery of the rotor 11. That is, in this embodiment, the motor assembly 10 is an inner rotor motor.

Without contradiction, the technical solutions in the embodiments of this disclosure can be applied to the embodiments of any of the above technical concepts.

For example, the motor assembly 10 further includes a housing 13 inside which the stator 12 and the rotor 11 are arranged. The housing 13 protects the stator 12 and the rotor 11.

In some embodiments, the stator 12 and the rotor 11 form at least a portion of a frameless motor, wherein the frameless motor can be an existing frameless motor in the market. The frameless motor is arranged inside the housing 13, which plays an installation and support role for the stator 12. The housing 13 can be designed according to overall structural requirement(s) of the cardiopulmonary resuscitation device. In this way, even if the housing 13 has special requirements, only the structure of the housing 13 needs to be designed, and the frameless motor can be purchased without customization, which is also conducive to reducing production costs.

In addition, the frameless motor has advantages of light weight, compact design, low inertia, precise control, fast dynamic response and friction-free commutation, which is conducive to improving operation experience of operator when using a cardiopulmonary resuscitation device, and also to improving a compression performance of the push-rod assembly 20. The rotor of the frameless motor directly drives the screw rod 30 to rotate through the connection structure, which is conducive to improving a utilization rate for kinetic energy of the motor and improving a transmission efficiency. Since it is not necessary to use an intermediate transmission element, such as a pulley, heating is less serious and heat dissipation effect is better. The frameless motor can be arranged at one end of the screw rod along the axial direction 30, such that a space utilization rate along the radial direction of the screw rod 30 is higher. Since the screw nut 35 and the screw rod 30 can be installed inside the frameless motor, and then the screw nut 35 is capable of penetrating through the first bearing 71 and entering into an interior of the motor assembly 10, the push-rod assembly 20 has a higher utilization rate for a compression height.

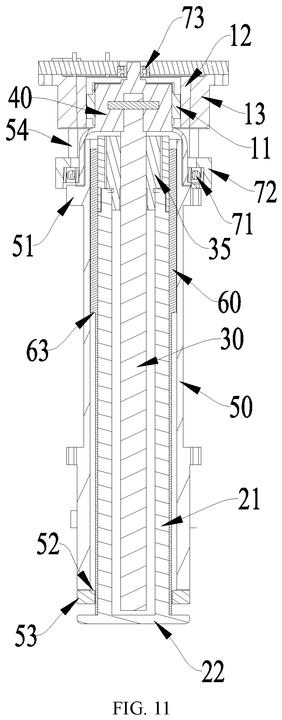

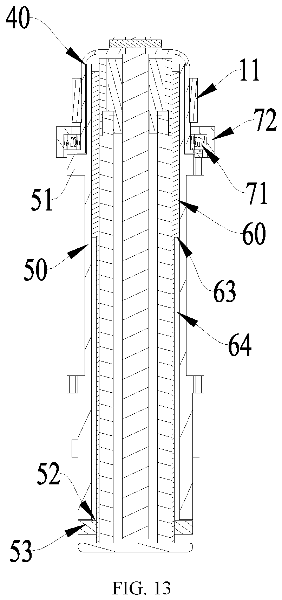

In some embodiments, refer to FIG. 13. At the initial retraction position, an orthographic projection of the screw nut 35 on a plane, which plane is parallel to the axial direction, at least partially overlaps with an orthographic projection of the rotor 11 on said plane, that is, the screw nut 35 extends into the hollow region of the rotor 11, so as to enable the motor assembly 10 and the screw nut 35 to have a large overlapping length along the axial direction. In this way, the embodiment can further reduce the dimension of the cardiopulmonary resuscitation device in the axial direction and make the structure more compact, when the push-rod length remains the same. Alternatively, referring to FIGS. 5 and 11, the screw nut 35 is located on a side of the rotor 11, which side faces the compression structure 22, along the axial direction, that is, an orthographic projection of the screw nut 35 on a plane, which plane is parallel to the axial direction, does not overlap with an orthographic projection of the rotor 11 on said plane.

In some embodiments, referring to FIGS. 5 to 14, an end of the screw rod 30, on a side of the screw rod, which side is adjacent to the motor assembly 10, penetrates through or is accommodated inside the hollow region of the rotor 11 along the axial direction.

The rotor 11 has a first end face and a second end face on opposite sides along the axial direction, wherein the first end face faces a side where the push-rod assembly 20 is located, and the second end face is opposite to the first end face.

It should be noted that an end of the screw rod 30 on a side of the screw rod, which side is adjacent to the motor assembly 10, penetrating through the hollow region of the rotor 11 along the axial direction, means that the end of the screw rod 30 extends into the hollow region of the rotor 11 along the axial direction and extends beyond the second end face of the rotor 11. An end of the screw rod 30 on a side of the screw rod, which side is adjacent to the motor assembly 10, being accommodated inside the hollow region of the rotor 11 along the axial direction, means that the end of the screw rod 30 extends into the hollow region of the rotor 11 along the axial direction and does not extend beyond the second end face of the rotor 11.

In this embodiment, no matter whether the end of the screw rod 30 extends beyond the second end face of the rotor 11 or not, an orthographic projection of the screw rod 30 on a plane, which plane is parallel to the axial direction, at least partially overlaps with an orthographic projection of the rotor 11 on said plane. In this way, when dimensions of the motor assembly 10 and the screw rod 30 remain unchanged, a space occupied by the rotor 11 and the screw rod 30 after assembly in the axial direction can be reduced, which is conducive to reducing an axial dimension of the cardiopulmonary resuscitation device and to a miniaturization design of the cardiopulmonary resuscitation device.

In some embodiments, referring to FIGS. 5 to 14, a portion of the connection structure 40 penetrates through or is accommodated inside the hollow region of the rotor 11.

It should be noted that, a portion of the connection structure 40 penetrating through the hollow region of the rotor 11, means that a portion of the connection structure 40 extends into the hollow region of the rotor 11 and extends beyond the second end face of the rotor 11, along the axial direction. A portion of the connection structure 40 being accommodated inside the hollow region of the rotor 11, means that a portion of the connection structure 40 extends into the hollow region of the rotor 11 and does not extend beyond the second end face, along the axial direction.

No matter whether the end of the rotor 11 extends beyond the second end face of the rotor 11 or not, in this embodiment, orthographic projections of the connection structure 40 and the rotor 11 on a plane, which plane is parallel to the axial direction, have an overlapping area. In this way, when the dimension of the motor assembly 10, the dimension of the screw rod 30, and the dimension of the push-rod assembly 20 remain unchanged, a space occupied by the rotor 11 and the connection structure 40 after assembly along the axial direction can be reduced, which is conducive to reducing the dimension of the cardiopulmonary resuscitation device in the axial direction, and is conducive to the miniaturization design of the cardiopulmonary resuscitation device.

In some embodiments, the connection structure 40 includes a connection end 42 and a connection cylinder 41. One end of the connection cylinder 41, which end faces the compression structure 22, has an opening 41a, the connection end 42 is arranged at one end of the connection cylinder 41, which end is away from the opening 41a, the connection end 42 penetrates through or is accommodated inside the hollow region of the rotor 11, and one end of the screw rod 30, which end is adjacent to the rotor 11, penetrates through or is accommodated inside the connection end 42. At the initial retraction position, the screw nut 35 and the guide sleeve 60 are inserted into the connection cylinder 41 through the opening 41a of the connection structure 40.

The connection end 42 penetrating through the hollow region of the rotor 11, means that the connection end 42 extends beyond an end surface of the rotor 11, which end surface is away from the push-rod assembly 20, along the axial direction and away from the push-rod assembly 20. The connection end 42 being accommodated inside the hollow region of the rotor 11, means that the connection end 42 extends into the hollow region and does not extend beyond an end surface of the rotor 11, which end surface is away from the push-rod assembly 20.

One end of the screw rod 30, which end is adjacent to the rotor 11, penetrating through the connection end 42, means that, an end of the screw rod 30 extends beyond an end face of the connection end 42, which end face is away from the connection cylinder 41. One end of the screw rod 30, which end is adjacent to the rotor 11, being accommodated inside the connection end 42, means that an end of the screw rod 30 extends into the connection end 42 and does not extend beyond an end face of one end of the connection end 42, which end surface is away from the connection cylinder 41.

In this embodiment, the structure of the connection structure 40 is beneficial to protecting the push-rod assembly 20, the screw rod 30 and the guide sleeve 60. Specifically, at the initial retraction position, the connection cylinder 41 plays a radial position-limiting role for the guide sleeve 60 and the screw nut 35, and further plays a radial position limiting role for the push-rod assembly 20, thus reducing the possibility of radial deflection.

In this embodiment, at the initial retraction position, orthographic projections of the connection structure 40 and the rotor 11 on a plane, which plane is parallel to the axial direction, overlap with each other; orthographic projections of the screw rod 30 and the connection end 42 on a plane, which plane is parallel to the axial direction, overlap with each other; orthographic projections of the screw nut 35 and the connection cylinder 41 on a plane, which plane is parallel to the axial direction, overlap with each other; orthographic projections of the guide sleeve 60 and the connection cylinder 41 on a plane, which plane is parallel to the axial direction, also overlap with each other. In this way, an axial space can be fully utilized, and a space occupied by the rotor 11, the connection structure 40, the screw rod 30, the guide sleeve 60, the screw nut 35, etc., after assembly, along the axial direction, can be reduced, which is conducive to reducing a space occupied by the cardiopulmonary resuscitation device in the axial dimension, and is conducive to a miniaturization design of cardiopulmonary resuscitation device.

The first bearing 71 includes an inner ring, an outer ring, and a rolling element. The outer ring is arranged on an outer periphery of the inner ring, and the rolling element is arranged between the inner ring and the outer ring along the radial direction. The rolling element enables the inner ring and the outer ring to rotate relative to each other. The inner ring is sleeved on an outer periphery of the connection structure 40. The inner ring and the connection structure 40 are relatively fixed, that is, they will not rotate relative to each other. The outer ring is fixed on some mounting structures that do not need to move, such as a housing 13 of a motor assembly 10, a sleeve 50 below, a bearing seat 72 below, etc. as long as the structures that do not need to move can be used to fix the outer ring.

Referring to FIG. 8, the first bearing 71 has a first end surface 71a on a side of the first bearing 71, which side faces the compression structure 22, and the first bearing 71 has a second end surface 71b on a side of the first bearing 71, which side is away from the compression structure 22, that is, the first end surface 71a and the second end surface 71b are opposite to each other.

In some embodiments, referring to FIGS. 11 to 13, the first bearing 71 is arranged outside the housing 13 and is located on a side of the housing 13, which side faces the compression structure 22, along the axial direction. That is, the first bearing 71 does not occupy an internal space of the housing 13.

In other embodiments, refer to FIGS. 5 to 10. The first bearing 71 is at least partially arranged inside the housing 13, and is arranged between the connection structure 40 and the housing 13 in a radial direction. For example, the inner ring of the first bearing 71 is fixed with the connection structure 40, and the outer ring of the first bearing 71 is fixed with the housing 13 of the motor assembly 10. In this embodiment, the first bearing 71 can make full use of the internal space of the housing 13, reduce an influence of the first bearing 71 on the axial dimension of the cardiopulmonary resuscitation device, and is conducive to reducing the axial dimension of the cardiopulmonary resuscitation device.

Two ends of the screw nut 35 along the axial direction have a first end surface and a second end surface, wherein the first end surface is located on a side of the screw nut 35, which side faces the compression structure, and the second end surface is opposite to the first end surface.

In some embodiments, please refer to FIG. 5, FIG. 11 and FIG. 13. At the initial retraction position, at least a portion of the screw nut 35 extends beyond the first end surface 71a along the axial direction and away from the compression structure 22. That is, at the initial retraction position, the second end surface of the screw nut 35 extends beyond the first end surface 71a of the first bearing 71 along the axial direction and away from the compression structure 22. It should be noted that in this embodiment, there is no restriction on whether the second end surface of the screw nut 35 extends beyond the second end surface 71b, that is, at the initial retraction position, orthographic projections of the screw nut 35 and the first bearing 71 on a plane, which plane is parallel to the axial direction can at least partially overlap with each other along the axial direction, for example, the second end surface of the screw nut 35 does not extend beyond the second end surface 71b of the first bearing 71. Alternatively, the first end surface and the second end surface of the screw nut 35 both extend beyond the first end surface 71a of the first bearing 71, but the first end surface of the screw nut 35 does not extend beyond the second end surface 71b of the first bearing 71, or the first end surface of the screw nut 35 does not extend beyond the first end surface 71a of the first bearing 71; or, at the initial retraction position, an orthographic projection of the screw nut 35 on a plane, which plane is parallel to the axial direction may completely not overlap with an orthographic projection of the first bearing 71 on said plane along the axial direction, and the screw nut 35 is located on a side of the first bearing 71, which side is away from the compression structure 22, along the axial direction, that is, the first end surface of the screw nut 35 also extends beyond the second end surface 71b of the first bearing 71.

Specifically, when the screw nut 35 and the push-rod assembly 20 move from an extreme extension position to the initial retraction position, the screw nut 35 gradually moves close to the first bearing 71, and the second end surface extends beyond the first end surface 71a along a movement direction, so as to enable the screw nut 35 and the push-rod assembly 20 to make full use of an axial space of the first bearing 71, which is conducive to reducing an axial dimension of the cardiopulmonary resuscitation device.

It should be noted that the screw nut 35 does not interfere with the first bearing 71 while moving.

It should be noted that in the above embodiment, at the initial retraction position, when the screw nut 35 and the push-rod assembly 20 move to the initial retraction position, the second end surface of the screw nut 35 can extend beyond or not extend beyond the second end surface 71b.

In some embodiments, referring to FIGS. 5 and 11, at the initial retraction position, orthographic projections of the screw nut 35, the first bearing 71 and the guide sleeve 60 on a plane, which plane is parallel to the axial direction, at least partially overlap with one another.

In other embodiments, refer to FIG. 13. At the initial retraction position, the screw nut 35 entirely extends beyond the second end surface 71b of the first bearing 71 along the axial direction and away from the compression structure 22, that is, the first end surface of the screw nut 35 extends beyond the second end surface 71b of the first bearing 71 along the axial direction and away from the compression structure 22. That is to say, an orthographic projection of the screw nut 35 on a plane, which plane is parallel to the axial direction, does not overlap with an orthographic projection of the first bearing 71 on said plane. In this way, the screw nut 35 is closer to the rotor 11 along the axial direction, which is conducive to reducing a dimension of the cardiopulmonary resuscitation device in the axial direction and is conducive to a miniaturization design of the cardiopulmonary resuscitation device.

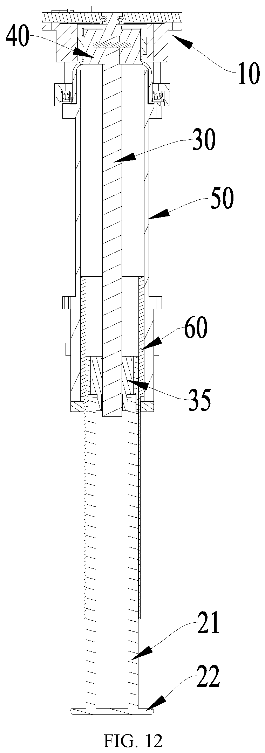

In some embodiments, referring to FIGS. 11 and 12, the screw nut 35 is arranged outside the housing 13 and is located on a side of the housing 13, which side faces the compression structure 22, along the axial direction. That is to say, within a stroke range for an axial movement of the screw nut 35, the screw nut 35 is always located on a side of the housing 13, which side faces the compression structure 22, along the axial direction, that is, the screw nut 35 will always not move into an interior of the housing 13.

In other embodiments, referring to FIGS. 5 and 13, at the initial retraction position, the screw nut 35 extends into an interior of the motor assembly 10. For example, for the orthographic projections of the screw nut 35, the housing 13, the rotor 11 and the stator 12 on a plane, which plane is parallel to the axial direction, at least a portion of the orthographic projection of the screw nut 35 may overlap with only a portion of the orthographic projection of the housing 13, but not overlap with the orthographic projection of the rotor 11 or the orthographic projection of the stator 12. For another example, for the orthographic projections of the screw nut 35, the housing 13, the rotor 11 and the stator 12 on a plane, which plane is parallel to the axial direction, at least a portion of the orthographic projection of the screw nut 35 not only overlaps with a portion of the orthographic projection of the housing, but also overlaps with the orthographic projection of the stator 12, but does not overlap with the orthographic projection of the rotor 11. For another example, for the orthographic projections of the screw nut 35, the housing 13, the rotor 11 and the stator 12 on a plane, which plane is parallel to the axial direction, at least a portion of the orthographic projection of the screw nut 35 not only overlaps with a portion of the orthographic projection of the housing, but also overlaps with the orthographic projection of the stator 12 and the orthographic projection of the rotor 11.

In some embodiments, the cardiopulmonary resuscitation device further includes a sleeve 50, which is sleeved on the outer periphery of the guide sleeve 60 and fixed relative to the stator 12, that is, the sleeve 50 and the stator 12 will not move relative to each other, and the sleeve 50 and the housing 13 of the motor assembly 10 will not move relative to each other. That is, the sleeve 50 will not move, while the push-rod assembly 20 moves. The push-rod body 21 is at least partially located inside the sleeve 50, that is, no matter where the push-rod body 21 moves to, a portion of the push-rod body 21 is always located inside the sleeve 50.

On the one hand, the sleeve 50 is conducive to a respective radial positioning of the guide sleeve 60 and the push-rod body 21, while the push-rod body 21 moves, thus reducing a respective radial deflection probability of the guide sleeve 60 and the push-rod body 21. On the other hand, the sleeve 50, the guide sleeve 60 and the push-rod body 21 are sleeved, which is conducive to reducing a radial dimension of the sleeve 50, the guide sleeve 60 and the push-rod body 21 after assembly, and is conducive to a dimension miniaturization of the cardiopulmonary resuscitation device along the radial direction.

It should be noted that cross-sectional shapes of the sleeve 50, the guide sleeve 60 and the push-rod body 21 can be the same or different on a cross-section perpendicular to the axial direction. When the cross-sectional shapes of the sleeve 50, the guide sleeve 60 and the push-rod body 21 are the same, for example, they are all circular, polygonal, etc., a radial dimension can be further reduced.

For example, referring to FIGS. 5 to 14, the orthographic projections of the first bearing 71 and the sleeve 50 on a plane, which plane is parallel to the axial direction, at least partially overlaps with each other. In this embodiment, the sleeve 50 and the first bearing 71 can share a portion of installation space in the axial direction, which is conducive to reducing a dimension of the cardiopulmonary resuscitation device in the axial direction and is conducive to a miniaturization design of the cardiopulmonary resuscitation device.

For example, referring to FIGS. 5 to 14, the sleeve 50 is inserted into the connection cylinder 41 through the opening 41a of the connection structure 40. In this embodiment, on the one hand, the sleeve 50 and the connection cylinder 41 can share a portion of the installation space along the axial direction, which is conducive to reducing a dimension of the cardiopulmonary resuscitation device in the axial direction and is conducive to a miniaturization design of the cardiopulmonary resuscitation device. On the other hand, the connection end 42 shields the end of the sleeve 50, reducing an entry of dust, element and another accident object into the sleeve 50. The sleeve 50 forms a relatively closed space with the connection structure 40 and the push-rod body 21, so as to enable the screw rod 30 to be located inside the relatively closed space, which reduces a probability of the screw rod 30 being exposed to an external environment, reduces a probability of corrosion of the screw rod 30 due to contact with water vapor, dust and other impurities, and is conducive to extending a service life of the screw rod 30.

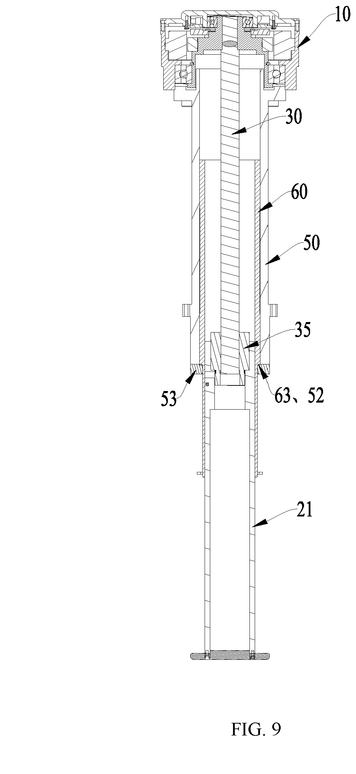

For example, referring to FIG. 5, FIG. 11 and FIG. 13, at the initial retraction position, the guide sleeve 60 is at least partially located inside the sleeve 50. Refer to FIG. 9, FIG. 10, FIG. 12 and FIG. 14. The push-rod assembly 20 also has an extreme extension position. At the extreme extension position, the guide sleeve 60 partially extends out of the sleeve 50. That is, the guide sleeve 60 is capable of moving with respect to the sleeve 50 along the axial direction.

The extreme extension position refers to an extreme position of a product design, to where the guide sleeve 60, the screw nut 35 and the push-rod body 21 are capable of moving away from the first bearing 71 (i.e. adjacent to the compression structure 22).

In this embodiment, at the extreme extension position, the guide sleeve 60 partially extends out of the sleeve 50, and the guide sleeve 60 is sleeved on an outer periphery of the push-rod body 21. Therefore, a portion of the guide sleeve 60, which portion extends out of the sleeve 50, is capable of continuing to play a role of movement guidance and radial positioning for the push-rod body 21, so as to reduce a cantilever length of the push-rod body 21 at the extreme extension position, improve a lateral stiffness of the push-rod body 21, reduce a possibility of lateral deflection of the push-rod body 21, and improve a movement stability of the push-rod body 21.

It should be noted that if the guide sleeve 60 is not arranged, a distance between one end of the push-rod body 21, which end is connected with the compression structure 22, and one end of the sleeve 50, which end is adjacent to the compression structure 22, is the cantilever length. If the guide sleeve 60 is arranged, a distance between one end of the push-rod body 21, which end is connected with the compression structure 22, and one end of the guide sleeve 60, which end is adjacent to the compression structure 22, is the cantilever length.

Therefore, in the embodiment the guide sleeve 60 is arranged, the cantilever length of the push-rod body 21 at the extreme extension position can be effectively reduced, a force condition of the push-rod body 21 can be improved, and a movement stability of the push-rod body 21 can be improved.

For example, at the initial retraction position, one end of the guide sleeve 60, which end is adjacent to the compression structure 22, can be completely located inside the sleeve 50. In this way, the guide sleeve 60 does not affect a distance between the compression structure 22 and one end of the sleeve 50, which end is adjacent to the compression structure 22, which is conducive to the compression structure 22 being as close to said end of the sleeve 50 as possible at the initial retraction position, reducing the axial dimension of the cardiopulmonary resuscitation device as much as possible, and is conducive to a miniaturization design of the cardiopulmonary resuscitation device.

For example, an anti-rotation structure is respectively arranged between the push-rod body 21 and the guide sleeve 60, and between the guide sleeve 60 and the sleeve 50, that is, there is no relative rotation between the push-rod body 21 and the guide sleeve 60, and there is no relative rotation between the guide sleeve 60 and the sleeve 50. It should be noted that the anti-rotation structure refers to a general term of a structure that prevents a relative rotation of two elements. The anti-rotation structure does not specifically limit a relative movement of said two elements along the axial direction.

There is no limitation to the specific structure of the anti-rotation structure, and any structure that can prevent rotation in the prior art can be used. For example, in some embodiments, two elements are connected radially by a connection element, such as a screw. At this time, the two elements can not only be anti-rotation circumferentially, but also be anti-movement axially (that is, there is no relative movement in the axial direction). In other embodiments, portions where the two elements fits with each other adopt a non-circular shape, which can also prevent a relative rotation. In other embodiments, the anti-rotation can be implemented by a fitting mean of flat key, keyway, etc.

In some embodiments, the guide sleeve 60 is capable of moving linearly along the axial direction relative to the sleeve 50, that is, although the guide sleeve 60 and the sleeve 50 cannot rotate relative to each other, they can move relative to each other along the axial direction. In this way, it is beneficial for the guide sleeve 60 to extend out of the sleeve 50 along the axial direction, which is convenient to a movement guidance and radial positioning of the push-rod body 21.

In some embodiments, the guide sleeve 60 is in movable connection with the push-rod assembly 20, so as to enable the guide sleeve 60 to move linearly relative to the push-rod assembly along the axial direction 20. That is, although the guide sleeve 60 and the push-rod assembly 20 cannot rotate relatively, they can move relatively along the axial direction. In this way, a relative movement between the guide sleeve 60 and the push-rod assembly 20 along the axial direction can ensure that at the initial retraction position, the guide sleeve 60 and the push-rod assembly 20 occupy a shorter axial space; at the extreme extension position, a lateral stiffness of the push-rod assembly 20 can be guaranteed due to the movement of the guide sleeve 60, so as to enable the push-rod assembly 20 to extend beyond the sleeve 50 for a longer distance, to have a longer movement stroke and a shorter cantilever length, thus improving a movement stability of the push-rod assembly 20.

For example, referring to FIG. 3, the guide sleeve 60 is provided with a first blocking structure 61 and a second blocking structure 62, wherein the first blocking structure 61 is located on a side of the second blocking structure 62, which side is adjacent to the compression structure 22, along the axial direction. That is, the first blocking structure 61 and the second blocking structure 62 are arranged with a gap region therebetween along the axial direction. It should be noted that orthographic projections of the first blocking structure 61 and the second blocking structure 62 on a plane, which plane is perpendicular to the axial direction of the guide sleeve 60, may at least partially overlap with or be staggered with each other.

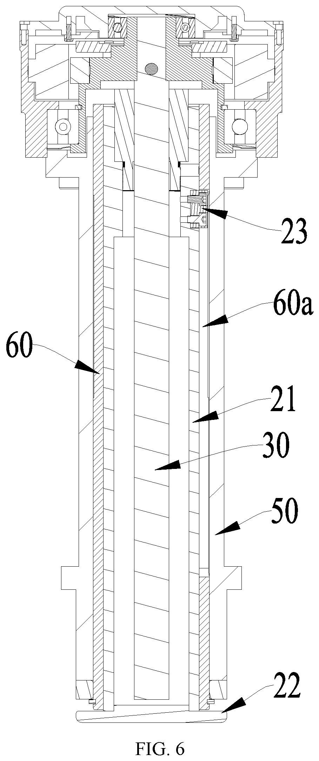

Refer to FIG. 3, the cardiopulmonary resuscitation device further includes a connection element 23, which is arranged on an outer periphery of the push-rod assembly 20. Refer to FIGS. 6, 7 and 8, the connection element 23 extends into a gap region between the first blocking structure 61 and the second blocking structure 62, and the connection element 23 is capable of moving linearly inside the gap region along the axial direction. In this embodiment, a movement distance of the connection element 23 inside the gap region along the axial direction is a relative movement distance between the guide sleeve 60 and the push-rod assembly 20 along the axial direction. It should be noted that a length of the gap region along the axial direction can be greater than or equal to a movement distance of the connection element 23 inside the gap region along the axial direction.

In some embodiments, referring to FIG. 6, at the initial retraction position, the second blocking structure 62 abuts against a side of the connection element 23, which side is away from the compression structure 22, along the axial direction, so as to enable the connection element 23 to hold at least a portion of the weight of the guide sleeve 60. In other words, at the initial retraction position, the guide sleeve 60 is hung on the connection element 23 through the second blocking structure 62, and the axial positioning of the guide sleeve 60 is achieved through the connection element 23.

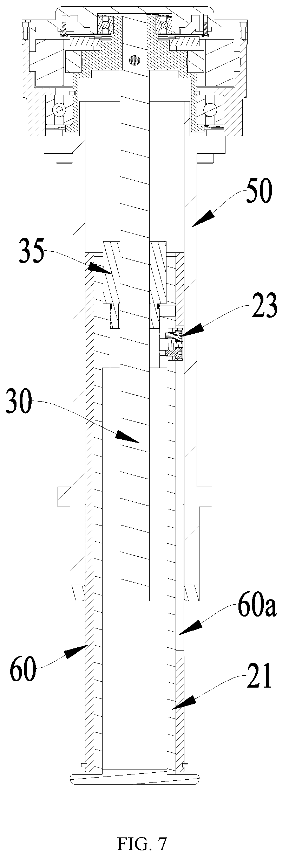

Specifically, refer to FIG. 6, a state in which the guide sleeve 60 and the push-rod assembly 20 at the initial retraction position is shown. When the rotor 11 starts to rotate forward, the rotor 11 drives the screw rod 30 to rotate forward through the connection structure 40, and the screw nut 35 drives the push-rod assembly 20 to move away from the rotor 11. When the push-rod assembly 20 moves, the guide sleeve 60 also moves away from the rotor 11 under its own gravity. When the guide sleeve 60 moves to a movement extreme position of the guide sleeve 60 inside the sleeve 50 (a position shown in FIG. 7), that is, from a position shown in FIG. 6 to a position shown in FIG. 7, at this time, the guide sleeve 60 cannot continue to move away from the rotor 11, the connection element 23 continues to move away from the rotor 11 with the push-rod assembly 20, and the connection element 23 is separated from the second blocking structure 62. The connection element 23 continues to move away from the rotor 11 with the push-rod assembly 20. The push-rod assembly 20 moves relative to the guide sleeve 60, and the push-rod assembly moves from the position shown in FIG. 7 to an extreme extension position shown in FIG. 9.

In some embodiments, when the push-rod assembly 20 moves until the connection element 23 contacts with the first blocking structure 61, the first blocking structure 61 prevents the connection element 23 from continuing to move downward, thereby preventing the push-rod assembly 20 from continuing to move downward, and a corresponding position at this time is the extreme extension position of the push-rod assembly 20. In other embodiments, it is also possible to control a maximum rotation angle of the rotor 11 (360 ° for one turn, when rotating n turns, the maximum rotation angle is n*360 °). When reaching the maximum rotation angle, the rotor 11 stops rotating. At this time, the push-rod assembly 20 moves to the extreme extension position. At this time, the connection element 23 may not yet be in contact with the first blocking structure 61, or it may just be in contact with the first blocking structure 61. In other embodiments, other blocking structures may also be provided. When any one of the screw nut 35 and the push-rod assembly 20 moves downward to contact with the blocking structure, the push-rod assembly 20 moves to the extreme extension position.

For example, while the push-rod assembly 20 moves from the extreme extension position shown in FIG. 9 to the initial retraction position shown in FIG. 5 and FIG. 6, the rotor 11 rotates backward, and the connection structure 40 drives the screw rod 30 to rotate backward, the screw rod 30 drives the screw nut 35 and the push-rod assembly 20 to move linearly toward the rotor 11, and the connection element 23 moves between the first blocking structure 61 and the second blocking structure 62. When the connection element 23 moves to contact with the second blocking structure 62, the connection element 23 drives the guide sleeve 60 to move toward the rotor 11 until the initial retraction position shown in FIGS. 5 and 6.

In other embodiments, at the initial retraction position, the connection element 23 may not contact with the second blocking structure 62, or no second blocking structure 62 is arranged, while a bottom end of the guide sleeve 60 (an end which is adjacent to the compression structure 22) abuts against the compression structure 22. Specifically, when the push-rod assembly 20 starts to retract from the extreme extension position, and the compression structure 22 contacts with the bottom end of the guide sleeve 60, the compression structure 22 drives the guide sleeve 60 to move toward the motor assembly 10 until the initial retraction position.

In some embodiments, refer to FIG. 3, FIG. 6 and FIG. 7. A side wall of the guide sleeve 60 is provided with a guide groove 60a, which extends along the axial direction, and the connection element 23 extends into the guide groove 60a and is capable of moving linearly inside the guide groove 60a along the axial direction. A groove wall on a side of the guide groove 60a, which side is adjacent to the compression structure 22, forms at least a portion of the first blocking structure 61, and a groove wall on a side of the guide groove 60a, which side is away from the compression structure 22, forms at least a portion of the second blocking structure 62.

In this embodiment, the guide groove 60a does not affect a radial dimension of the guide sleeve 60. Therefore, the guide groove 60a does not affect a fitting between an inner periphery surface of the guide sleeve 60 and an outer periphery surface of the push-rod body 21, and the structure is simple. In addition, when the connection element 23 extends into the guide groove 60a, an anti-rotation effect between the guide sleeve 60 and the push-rod body 21 can be achieved, so as to prevent a relative rotation between the guide sleeve 60 and the push-rod body 21. That is, the guide groove 60a and the connection element 23 are equivalent to the above anti-rotation structure. Moreover, a fitting between the connection element 23 and the guide groove 60a can also play a guide effect along the axial direction. That is to say, a fitting between the guide groove 60a and the connection element 23 has functions of blocking along the axial direction, anti-rotation along a circumferential direction, and movement guidance along the axial direction, at the same time.

In some embodiments, refer to FIG. 3, FIG. 5, FIG. 11, and FIG. 13. A first position-limiting structure 63 is arranged at an outer periphery surface of the guide sleeve 60. The cardiopulmonary resuscitation device further includes a second position-limiting structure 52, which fits with the first position-limiting structure 63. The first position-limiting structure 63 and the second position-limiting structure 52 are configured to limit a distance of a linear movement, along the axial direction, of the guide sleeve 60 inside the sleeve 50 toward a side, which side is adjacent to the compression structure 22. Specifically, when the guide sleeve 60 moves toward the side, which is adjacent to the compression structure 22, until the first position-limiting structure 63 contacts with the second position-limiting structure 52, the second position-limiting structure 52 prevents the guide sleeve 60 from continuing to move. At this time, the guide sleeve 60 moves to the extreme position relative to the sleeve 50.

Specific implementation methods of the first position-limiting structure 63 and the second position-limiting structure 52 are not limited.

In some embodiments, the first position-limiting structure 63 is a step surface, which is formed on an outer periphery surface of the guide sleeve 60, and located on a side of the guide sleeve 60, which side is adjacent to the compression structure 22, and the second position-limiting structure 52 is a convex structure, which protrudes inward from an inner periphery surface of the sleeve 50 along a radial direction. It can be understood that the step surface can be an annular step surface, that continuously surrounds an outer periphery of the guide sleeve 60, or can be discontinuous along a circumferential direction of the guide sleeve 60.

It should be noted that the second position-limiting structure 52 being a convex structure, which protrudes from the inner periphery surface of the sleeve 50 along a radial direction, means that an orthographic projection of the second position-limiting structure 52 on a plane, which plane is perpendicular to the axial direction of the sleeve 50, extends beyond an orthographic projection of the inner periphery surface of the sleeve 50 on said plane, which plane is perpendicular to the axial direction of the sleeve 50, along the radial direction.

In some embodiments, refer to FIGS. 3, 5, 11 and 13. The cardiopulmonary resuscitation device includes an end cap 53, which is arranged at one end of the sleeve 50, which end is adjacent to the compression structure 22, and the push-rod body 20 penetrates through the end cap 53. For example, a portion of an inner periphery of the end cap 53 extends beyond the inner periphery surface of the sleeve 50 along a radial direction, thereby forming the second position-limiting structure 52 described above.

In some embodiments, the end cap 53 and the sleeve 50 are separated structures and connected with each other, that is, they are independent elements.

In other embodiments, the end cap 53 and at least a portion of the sleeve 50 are an integral structure.

It should be noted that, referring to FIG. 3 and 4, an outer periphery surface of the guide sleeve 60 is also provided with an avoidance structure 64, that avoids the second position-limiting structure 52. In this way, when the first position-limiting structure 63 and the second position-limiting structure 52 do not contact with each other, the second position-limiting structure 52 fits with the avoidance structure 64, so as to prevent interference between the second position-limiting structure 52 and the guide sleeve 60.

For example, the guide sleeve 60 is roughly in a cylindrical structure, and a portion of an outer surface of the cylindrical structure, which outer surface is adjacent to a side of the compression structure 22, is scraped, and the scraped portion forms the avoidance structure 64. The first position-limiting structure 63 is formed at a junction of the scraped portion and a non-scraped portion, at one end which is adjacent to the motor assembly 10 along the axial direction.

The fitting between the second position-limiting structure 52 and the avoidance structure 64 can also have an anti-rotation effect to prevent a relative rotation between the guide sleeve 60 and the sleeve 50, that is, the second position-limiting structure 52 and the avoidance structure 64 are equivalent to the above anti-rotation structure between the guide sleeve 60 and the sleeve 50.

In some embodiments, the sleeve 50 and the housing 13 are in an integral structure, for example, by one-piece injection molding.

In other embodiments, the sleeve 50 and the housing 13 are separate structures, that is, they are independent elements.

In some embodiments, referring to FIGS. 11 and 12, the motor assembly 10 is located at one end of the sleeve 50, which end is away from the compression structure 22, along the axial direction. The sleeve 50 is arranged entirely outside the housing 13 and is located on a side of the housing 13, which side faces the compression structure 22, along the axial direction. In this way, a radial dimension of the sleeve 50 does not affect a dimension of the housing 13 of the motor assembly 10, which is conducive to maintaining an overall miniaturization of the motor assembly 10.

In other embodiments, refer to FIGS. 13 and 14, a portion of the sleeve 50 is arranged inside the housing 13, and an orthographic projection of the sleeve 50 on a plane, which plane is parallel to the axial direction, at least partially overlaps with an orthographic projection of the rotor 11 on said plane. In this embodiment, the sleeve 50 extends into the hollow region of the rotor 11, which is conducive to reducing an axial dimension of the cardiopulmonary resuscitation device.

In other embodiments, refer to FIGS. 5 to 10. A portion of the sleeve 50 is arranged inside the housing 13, and the sleeve 50 is located entirely on a side of the rotor 11, which side faces the compression structure 22, along the axial direction. That is to say, the sleeve 50 will not extend into the rotor 11, and a dimension of the sleeve 50 will not affect a dimension of the rotor 11, which is conducive to maintaining a miniaturization of the rotor 11. In addition, because a portion of the sleeve 50 is arranged inside the housing 13, an axial dimension of the cardiopulmonary resuscitation device can be reduced to a certain extent.

In some embodiments, an outer periphery of one end of the sleeve 50, which end is adjacent to the motor assembly 10, is provided with a flange 51, wherein the flange 51 extends outward along a radial direction. The flange 51 and the sleeve 50 may be an integral structure, such as an integral plastic part; and can also be separated structures, which are connected together.

In some embodiments, the flange 51 is arranged outside the housing 13 and is located on a side of the housing 13, which side faces the compression structure 22, along the axial direction. The housing 13 is directly or indirectly connected with the flange 51. The weight of the motor assembly 10 can be directly or indirectly transmitted to the flange 51 through the housing 13, and then to the sleeve 50, that is, the sleeve 50 can provide an installation support for the motor assembly 10.

In some embodiments, refer to FIGS. 11 to 14. The first bearing 71 is located outside of the housing 13 and faces a side of the compression structure 22 along the axial direction. The first bearing 71 is arranged between the housing 13 and the flange 51 along the axial direction. That is, in this embodiment, the first bearing 71 does not protrude into the motor assembly 10.

In some embodiments, the cardiopulmonary resuscitation device includes a connection column, which is connected with the housing 13, wherein the connection column extends from a side of the housing 13, which side faces the compression structure 22, along the axial direction; and the connection column is connected with the housing 13 and the flange 51. In this embodiment, a weight of the motor assembly 10 is transmitted to the flange 51 through the connection column. It should be noted that the connection column needs to avoid the first bearing 71 arranged between the housing 13 and the flange 51. In addition, in this embodiment, some structures that are convenient for fixing the outer ring of the first bearing 71 can be arranged at the flange 51. For example, while connecting the housing 13 and the flange 51 through the connection column, the outer ring of the first bearing 71 can also be fixed through the connection column. Of course, other structures can also be added to fix the outer ring of the first bearing 71.

In some embodiments, refer to FIGS. 11 to 14. The cardiopulmonary resuscitation device further includes a bearing seat 72. The first bearing 71 is arranged at the bearing seat 72, and the bearing seat 72 provides an installation support for the first bearing 71.

In some embodiments, refer to FIGS. 11 and 12. The cardiopulmonary resuscitation device includes a connection column 54, which is connected with the housing 13; wherein the connection column 54 extends from a side of the housing 13, which side faces the compression structure 22, along the axial direction; and the connection column is connected with the housing 13 and the bearing seat 72. In this embodiment, the weight of the motor assembly 10 is transmitted to the bearing seat 72 through the connection column 54, and then to the flange 51 through the bearing seat 72.

In other embodiments, referring to FIGS. 13 and 14, the bearing seat 72 is directly connected with the flange 51 and housing 13. In other words, in this embodiment, the above connection column 54 can be canceled, and the weight of the motor assembly 10 is directly transmitted to the bearing seat 72 through the housing 13, and then to the flange 51 through the bearing seat 72.

In some embodiments, refer to FIGS. 4 to 10. The housing 13 is directly connected with the flange 51. The first bearing 71 is arranged inside the housing 13, and between the housing 13 and the connection structure 40, along the radial direction. In this embodiment, the weight of the motor assembly 10 is directly transmitted to the flange 51 through the housing 13. In this way, an axial dimension of cardiopulmonary resuscitation device can be further reduced, which is conducive to a miniaturization design of cardiopulmonary resuscitation device.

In some embodiments, the rotor 11 and the connection structure 40 are an integral structure. Alternatively, the rotor 11 and the connection structure 40 are separated structures which are connected together, for example, through screws, bolts, welding, etc. there is no restriction here.

In some embodiments, the cardiopulmonary resuscitation device further includes a detection structure 80 for detecting a rotation angle of at least one of the rotor 11, the connection structure 40 and the screw rod 30. It should be noted that respective rotation angle of the rotor 11, the connection structure 40 and the screw rod 30 are synchronous and the same, and said rotation angle has a definite relationship with a movement stroke of the push-rod assembly 20. Therefore, a movement stroke of push-rod assembly 20 can be obtained by detecting the rotation angle, and the movement stroke of the push-rod assembly 20 can also be controlled by controlling a rotation angle of the rotor 11. For example, for children and adults, compression depths of the compression structure 22 are different. Therefore, the rotation angle of the rotor 11 is controlled by detecting angle information of the detection structure 80, and then a compression stroke of the compression structure 22 is controlled.

The specific type of the detection structure 80 is not limited, for example, it may be an encoder.

In some embodiments, referring to FIGS. 5 to 10, the detection structure 80 is at least partially located at a radial inner side of the stator 12, and the detection structure 80 is sleeved on the outer periphery of the connection structure 40. In this embodiment, the detection structure 80 is hollow, for example, it can be a hollow encoder, and at least a portion of the connection element 23 extends into the detection structure 80. Specifically, in some specific embodiments, when the connection structure 40, the stator 12, the rotor 11, and the housing 13 are assembled together, there will still be a portion of empty space between the radial inner side of the stator 12 and the outer periphery of the connection structure 40, which portion of empty space is capable of accommodating the detection structure 80, so that an installation space required for the detection structure 80 and the rotor 11 along the axial direction can be saved, which is conducive to reducing a dimension of the cardiopulmonary resuscitation device in the axial direction.

In other embodiments, the detection structure 80 is located on a side of the stator 12, which side is away from the compression structure 22, along the axial direction. For example, the detection structure 80 can be located inside the housing 13 or outside the housing 13. Specifically, a protective housing can be added outside the housing 13. The protective housing is connected with the housing 13, and the detection structure 80 is accommodated inside the protective housing.

In some embodiments, the cardiopulmonary resuscitation device further includes a second bearing 73, which is arranged on an outer periphery of the connection structure 40, or on an outer periphery of one end of the screw rod 30, which end is adjacent to the motor assembly 10, and the second bearing 73 is located on a side of the rotor 11, which side is away from the first bearing 71, along the axial direction, and the first bearing 71 and the second bearing 73 are coaxially arranged.

In this embodiment, the first bearing 71 and the second bearing 73 can strengthen a stability of the screw rod 30 and reduce a deviation rate of the screw rod 30.

In this embodiment, two bearings (the first bearing 71 and the second bearing 73) can support rotation of the rotor 11, the screw rod 30 and the push-rod assembly 20. Generally speaking, a rotor with a hollow region (which can be understood as the rotor of frameless motor) needs two bearings, and a transmission system composed of a screw rod and a push-rod assembly needs one bearing, that is to say, when a frameless motor is applied to a transmission system composed of a screw rod and a push-rod assembly generally, at least three bearings in total are required. However, in the embodiment of this disclosure, through an ingenious design, the first bearing 71 and the second bearing 72 jointly support the connection structure 40, the rotor 11, the screw rod 30 and the push-rod assembly 20, which reduces a number of bearings, simplifies structure, reduces an axial dimension of the cardiopulmonary resuscitation device, and is conducive to realizing an overall miniaturization of the cardiopulmonary resuscitation device.

Referring to FIG. 5, the first bearing 71 and the second bearing 73 are both sleeved on the outer periphery of the connection structure 40, that is, the first bearing 71 and the second bearing 73 are assembled at a same structure, which is conducive to controlling an assembly accuracy and axiality, and also helps to improve a rotation stability of the rotor 11, thus improving an overall stability of cardiopulmonary resuscitation device.

The following is a brief introduction to three specific embodiments of this disclosure in combination with the accompanying drawings, and the other structures may refer to the above description of this disclosure, which will not be repeated here.

### First embodiment

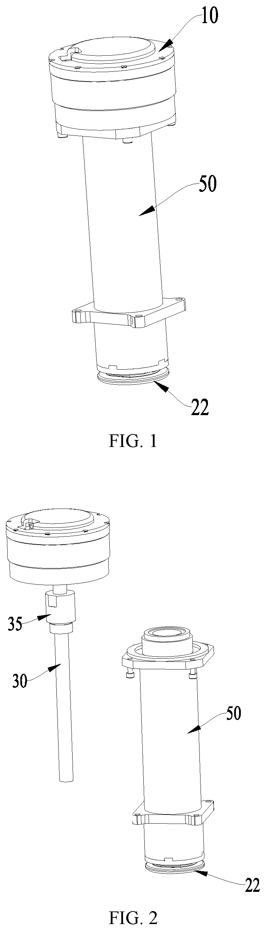

Refer to FIG. 1-10.

One end of a sleeve 50, which end is away from a compression structure 22, extends into a housing 13 of a motor assembly 10, and extends into a connection cylinder 41 from an opening 41a of the connection cylinder 41.

A housing 13 is directly connected with a flange 51. A weight of a motor assembly 10 can be transmitted directly to the flange 51 through the housing 13.

A first bearing 71 is located inside the housing 13, and is arranged between the housing 13 and the connection cylinder 41 along the axial direction.

One end of a screw rod 30, which end is away from the compression structure 22, penetrates through a hollow region of the rotor 11, and a second bearing 73 is sleeved on an outer periphery of a portion of the connection structure 40, which portion extends beyond the rotor 11 along the axial direction. Specifically, an inner ring of the first bearing 71 is fixed on an outer periphery of the connection cylinder 41, and an inner ring of the second bearing 73 is fixed on an outer periphery of a connection end 42. That is to say, the first bearing 71 and the second bearing 73 are both sleeved on an outer periphery of the connection structure 40.

The connection end 42 of the connection structure 40 penetrates through the hollow region of the rotor 11.

At an initial retraction position, a screw nut 35 and a guide sleeve 60 extend into the connection cylinder 41 from an opening 41a of the connection cylinder 41.

A detection structure 80 is located inside the housing 13 and on a side of the rotor 11, which side is away from the pushrod assembly 20. Specifically, the detection structure 80 is located between an radial inner side of the stator 12 and the outer periphery of the connection end 42.

In this embodiment, it is not necessary to configure a bearing seat 72 for the first bearing 71.

### Second embodiment

Referring to FIGS. 11 and 12, a first bearing 71 is located outside a housing 13, and between the housing 13 and a flange 51. The first bearing 71 is arranged inside a bearing seat 72, and the housing 13 is connected with the bearing seat 72 through a connection column 54. A second bearing 73 surrounds an outer periphery of the connection end 42.

One end of the sleeve 50, which end is away from the compression structure 22, is located on an outer side of the housing 13, that is, orthographic projections of the sleeve 50 and the housing 13 on a plane, which plane is parallel to an axial direction, do not overlap with each other. The sleeve 50 penetrates through the first bearing 71 along the axial direction, that is, the first bearing 71 surrounds the outer periphery of the sleeve 50.

A screw nut 35, a guide sleeve 60, and a push-rod assembly 20 are located outside of the housing 13 and on a side of the housing 13, which side faces the compression structure 22. Orthographic projections of the sleeve 50 and the motor assembly 10 on any one plane, which plane is parallel to the axial direction, do not overlap with each other. At the initial retraction position, orthographic projections of the guide sleeve 60 and the motor assembly 10 on any one plane, which plane is parallel to the axial direction, do not overlap with each other; orthographic projections of the screw nut 35 and the motor assembly 10 on any one plane, which plane is parallel to the axial direction, do not overlap with each other; orthographic projections of the screw nut 35 and the first bearing 71 on any one plane, which plane is parallel to the axial direction, partially overlap with each other.

The connection end 42 penetrates through a hollow region of the rotor 11, and one end of the screw rod 30 is accommodated inside the connection end 42.

### Third Embodiment

Referring to FIGS. 13 and 14, one end of a sleeve 50, which end is away from a compression structure 22, extends into a housing 13 of a motor assembly 10, and extends into a connection cylinder 41 from an opening 41a of the connection cylinder 41.

A first bearing 71 is located on an outer side of the housing 13, and between the housing 13 and a flange 51. The first bearing 71 is arranged at a bearing seat 72, the housing 13 is connected with the bearing seat 72, and the bearing seat 72 is connected with the flange 51. A weight of the motor assembly 10 can be transmitted to the bearing seat 72 through the housing 13, and then to the flange 51 through the bearing seat 72.

A connection end 42 of the connection structure 40 penetrates through a hollow region of the rotor 11.

At an initial retraction position, respective end of the sleeve 50, the screw nut 35, and the guide sleeve 60, which respective end is away from the compression structure 22, extends into the housing 13 of the motor assembly 10 and into the hollow region of the rotor 11, that is, orthographic projections of the guide sleeve 60, the screw nut 35, and the sleeve 50 on any one plane, which plane is parallel to the axial direction, all overlap with an orthographic projection of the rotor 11 on said plane.

It can be seen from the above embodiments that, in the cardiopulmonary resuscitation device in the embodiment of this disclosure, through a reasonable layout of the screw rod 30, the rotor 11, the first bearing 71, the guide sleeve 60, sleeve 50 and other structures, the motor assembly 10 is capable of being arranged at one end of the screw rod 30 along the axial direction, a space utilization along the radial direction of the screw rod 30 is higher, which is conducive to reducing dimensions of the cardiopulmonary resuscitation device in all directions which are perpendicular to the axial direction (that is, the radial direction of the screw rod 30), as well as conducive to improving a structural compactness of the cardiopulmonary resuscitation device. In additional, this is also conducive to reducing an axial dimension of the cardiopulmonary resuscitation device at the initial retraction position, that is, the cardiopulmonary resuscitation device is capable of having a reduced dimension in all directions which are perpendicular to the axial direction of the screw rod 30, and is also capable of having a reduced dimension in the axial direction, which is conducive to realizing an overall miniaturization of the cardiopulmonary resuscitation device. Furthermore, a structure of frameless motor is adopted, and the rotor of the frameless motor directly drives the screw rod 30 to rotate through the connection structure, which is conducive to improving a utilization rate of kinetic energy of the motor and improving a transmission efficiency. Since no intermediate transmission element, such as a belt pulley, is required, heating is not too serious and a heat dissipation effect is better. The frameless motor can be arranged at one end of the screw rod along the axial direction 30, such that a space utilization rate along the radial direction of the screw rod 30 is higher. In some embodiment, since the screw nut 35 and the screw rod 30 can be installed inside the frameless motor, and then the screw nut 35 is capable of penetrating through the first bearing 71 and entering into an interior of the motor assembly 10, the push-rod assembly 20 has a higher utilization rate for a compression height.

In the description of this disclosure, the reference to the terms "one embodiment", "some embodiments", "examples", "specific examples", or "some examples" means that the specific features, structures, materials, or characteristics described in conjunction with the embodiment or example are included in at least one embodiment or example of this disclosure. In this disclosure, the illustrative expressions of the above terms do not necessarily refer to the same embodiments or examples. Moreover, the specific features, structures, materials, or characteristics described can be combined in any one or more embodiments or examples in an appropriate manner. In addition, those skilled in this field can combine the different embodiments or examples described in this disclosure, as well as the features of different embodiments or examples, without conflicting with each other.

The above are only preferred embodiments of this disclosure and are not intended to limit this disclosure. For those skilled in the art, this disclosure can have various changes and modifications. Any modification, equivalent replacement, improvement, etc. made within the spirit and principle of this disclosure are included in the protection scope of this disclosure.

## Claims

1. A cardiopulmonary resuscitation device, **characterized in that**, comprising:
a motor assembly, which comprises a stator and a rotor, wherein the rotor has an annular structure and defines a hollow region, the stator is arranged on an outer periphery of the rotor;
a screw rod, which is coaxially arranged with the rotor;
a connection structure, which connects the rotor and the screw rod;
a screw nut, which is sleeved on an outer periphery of the screw rod and fits with the screw rod;
a push-rod assembly, which is configured to implement a chest compression on an object; wherein the push-rod assembly comprises a push-rod body and a compression structure; wherein the compression structure is arranged at one end of the push-rod body, which end is away from the motor assembly; the other end of the push-rod body, which end is adjacent to the motor assembly, is connected with the screw nut; the push-rod body is sleeved on the outer periphery of the screw rod; wherein the rotor is configured to drive the screw rod to rotate through the connection structure, the screw rod is configured to drive the screw nut to move linearly along an axial direction while rotating, so as to drive the push-rod assembly to move linearly along the axial direction through the screw nut;
a first bearing, which is configured to simultaneously support a rotation of the rotor and a linear movement of the push-rod assembly, wherein the first bearing surrounds an outer periphery of the connection structure and is located on a side of the rotor, which side faces the compression structure, along the axial direction; and
a guide sleeve, which is configured to guide the push-rod assembly to move linearly along the axial direction, wherein the guide sleeve is sleeved on an outer periphery of the push-rod body;
wherein the push-rod assembly has an initial retraction position; wherein at the initial retraction position, an orthographic projection of the screw nut on a plane, which plane is parallel to the axial direction, at least partially overlaps with an orthographic projection of the stator on said plane, and an orthographic projection of the first bearing on a plane, which plane is parallel to the axial direction, at least partially overlaps with an orthographic projection of the guide sleeve on said plane.

2. The cardiopulmonary resuscitation device according to claim 1, **characterized in that**,
at the initial retraction position, an orthographic projection of the screw nut on a plane, which plane is parallel to the axial direction, at least partially overlaps with an orthographic projection of the stator on said plane; or at the initial retraction position, the screw nut is located on a side of the rotor, which side faces the compression structure, along the axial direction; or
an end of the screw rod on a side of the screw rod, which side is adjacent to the motor assembly, penetrates through or is accommodated inside the hollow region of the rotor along the axial direction.

3. The cardiopulmonary resuscitation device according to claim 1, **characterized in that**, a portion of the connection structure penetrates through or is accommodated inside the hollow region of the rotor;
wherein the connection structure comprises a connection end and a connection cylinder, wherein the connection cylinder is provided with an opening at one end of the connection cylinder, which end faces the compression structure, wherein the connection end is arranged at the other end of the connection cylinder, which end is away from the opening; the connection end penetrates through or is accommodated inside the hollow region of the rotor, one end of the screw rod, which end is adjacent to the rotor, penetrates through or is accommodated inside the connection end;
at the initial retraction position, the screw nut and the guide sleeve are inserted into the connection cylinder through the opening of the connection structure;
preferably, the cardiopulmonary resuscitation device further comprises a sleeve, which is sleeved on an outer periphery of the guide sleeve and fixed relative to the stator; wherein the push-rod body is at least partially located inside the sleeve; wherein the sleeve is inserted into the connection cylinder through the opening of the connection structure.

4. The cardiopulmonary resuscitation device according to claim 1, **characterized in that**, the motor assembly further comprises a housing, wherein the stator and the rotor are arranged inside the housing;
the first bearing is arranged outside the housing and located on a side of the housing, which side faces the compression structure, along the axial direction; or
the first bearing is at least partially arranged inside the housing, and is arranged between the connection structure and the housing along the axial direction.

5. The cardiopulmonary resuscitation device according to claim 1, **characterized in that**, the first bearing is provided with a first end surface on a side of the first bearing, which side faces the compression structure; wherein at the initial retraction position, at least a portion of the screw nut extends beyond the first end surface along the axial direction and away from the compression structure.

6. The cardiopulmonary resuscitation device according to claim 1, **characterized in that**, at the initial retraction position, orthographic projections of the screw nut, the first bearing and the guide sleeve on a plane, which plane is parallel to the axial direction, at least partially overlap with one another; or
the first bearing is provided with a second end surface on a side of the first bearing, which side is away from the compression structure; wherein at the initial retraction position, the screw nut entirely extends beyond the second end surface along the axial direction and away from the compression structure.

7. The cardiopulmonary resuscitation device according to claim 1, **characterized in that**, further comprising a sleeve, which is sleeved on an outer periphery of the guide sleeve and fixed relative to the stator; wherein the push-rod body is at least partially located inside the sleeve; an orthographic projection of the first bearing on a plane, which plane is parallel to the axial direction, at least partially overlaps with an orthographic projection of the sleeve on said plane.

8. The cardiopulmonary resuscitation device according to claim 1, **characterized in that**, further comprising a sleeve, which is sleeved on an outer periphery of the guide sleeve and fixed relative to the stator; wherein the push-rod body is at least partially located inside the sleeve;
the guide sleeve is at least partially located inside the sleeve at the initial retraction position;
the push-rod assembly is further provided with an extreme extension position, at which position, the guide sleeve partially extends out of the sleeve.

9. The cardiopulmonary resuscitation device according to claim 1, **characterized in that**, the guide sleeve is in movable connection with the push-rod assembly, so as to enable the guide sleeve to move linearly relative to the push-rod assembly along the axial direction;
the guide sleeve is provided with a first blocking structure and a second blocking structure; wherein the first blocking structure is located on a side of the second blocking structure, which side is adjacent to the compression structure, along the axial direction;
the cardiopulmonary resuscitation device further comprises a connection element, which is arranged on an outer periphery of the push-rod assembly and extends into a gap region between the first blocking structure and the second blocking structure, wherein the connection element is capable of moving linearly inside the gap region along the axial direction;
preferably, a side wall of the guide sleeve is provided with a guide groove, which extends along the axial direction; wherein the connection element extends into the guide groove, and is capable of moving linearly inside the guide groove along the axial direction; wherein, a groove wall of the guide groove on a side of the guide groove, which side is adjacent to the compression structure, forms at least a portion of the first blocking structure; a groove wall of the guide groove on a side of the guide groove, which side is away from the compression structure, forms at least a portion of the second blocking structure; or
at the initial retraction position, the second blocking structure abuts against a side of the connection element, which side is away from the compression structure, along the axial direction, so as to enable the connection element to hold at least a portion of a weight of the guide sleeve.

10. The cardiopulmonary resuscitation device according to claim 1, **characterized in that**, further comprising a sleeve, which is sleeved on an outer periphery of the guide sleeve and fixed relative to the stator; wherein the push-rod body is at least partially located inside the sleeve; wherein an outer periphery surface of the guide sleeve is provided with a first position-limiting structure; wherein the cardiopulmonary resuscitation device further comprises a second position-limiting structure, which fits with the first position-limiting structure; wherein the first position-limiting structure and the second position-limiting structure are configured to limit a distance of a linear movement, along the axial direction, of the guide sleeve inside the sleeve toward a side, which side is adjacent to the compression structure;
the first position-limiting structure is a step surface, which is formed on the outer periphery surface of the guide sleeve and located on a side of the guide sleeve, which side is adjacent to the compression structure; the second position-limiting structure is a convex structure, which protrudes inward from an inner periphery surface of the sleeve along a radial direction; or the first position-limiting structure is a step surface, which is formed on the outer periphery surface of the guide sleeve and located on a side of the guide sleeve, which side is adjacent to the compression structure; wherein the cardiopulmonary resuscitation device further comprises an end cap, which is arranged at one end of the sleeve, which end is adjacent to the compression structure; wherein the push-rod body penetrates through the end cap, and the second position-limiting structure is a convex structure, which protrudes inward from an inner periphery surface of the end cap along a radial direction.

11. The cardiopulmonary resuscitation device according to claim 9, **characterized in that**, the motor assembly further comprises a housing, wherein the sleeve and the housing together form an integral structure; or
the motor assembly is located at one end of the sleeve, which end is away from the compression structure, along the axial direction; wherein the motor assembly further comprises a housing; the sleeve is arranged entirely outside the housing and located on a side of the housing, which side faces the compression structure, along the axial direction; or
the motor assembly further comprises a housing, and a portion of the sleeve is arranged inside the housing; an orthographic projection of the sleeve on a plane, which plane is parallel to the axial direction, at least partially overlaps with an orthographic projection of the rotor on said plane; or the sleeve is entirely located on a side of the rotor, which side faces the compression structure, along the axial direction.

12. The cardiopulmonary resuscitation device according to claim 1, **characterized in that**, further comprising a sleeve, which is sleeved on an outer periphery of the guide sleeve and fixed relative to the stator; wherein the push-rod body is at least partially located inside the sleeve;
a flange is arranged on an outer periphery of one end of the sleeve, which end is adjacent to the motor assembly, and the flange extends outward along a radial direction;
the motor assembly further comprises a housing, wherein the flange is arranged outside the housing and located on a side of the housing, which side faces the compression structure, along the axial direction;
the housing is directly or indirectly connected with the flange.

13. The cardiopulmonary resuscitation device according to claim 12, **characterized in that**,
the first bearing is arranged outside the housing and located on the side of the housing, which side faces the compression structure, along the axial direction; wherein the first bearing is arranged between the housing and the flange along the axial direction; wherein the cardiopulmonary resuscitation device further comprises a connection column, which is connected with the housing, wherein the connection column extends from the side of the housing, which side faces the compression structure, along the axial direction; wherein the connection column is connected with the housing and the flange; or the cardiopulmonary resuscitation device further comprises a bearing seat and a connection column, wherein the first bearing is arranged at the bearing seat; the connection column is connected with the housing, wherein the connection column extends from the side of the housing, which side faces the compression structure, along the axial direction; wherein the connection column is connected with the housing and the bearing seat; or the first bearing comprises a bearing seat, and the bearing seat is directly connected with the flange and the housing; or
the housing is directly connected with the flange, wherein the first bearing is arranged inside the housing, and is arranged between the housing and the connection structure along a radial direction.

14. The cardiopulmonary resuscitation device according to claim 1, **characterized in that**, further comprising a detection structure, which is configured to detect a rotation angle of at least one of the rotor, the connection structure and the screw rod;
wherein the detection structure is at least partially located on an inner side of the stator along a radial direction; the detection structure is sleeved on an outer periphery of the connection structure; or the detection structure is located on a side of the stator, which side is away from the compression structure, along the axial direction.

15. The cardiopulmonary resuscitation device according to claim 1, **characterized in that**, further comprising a second bearing, which is arranged on an outer periphery of the connection structure or an outer periphery of one end of the screw rod, which end is adjacent to the motor assembly; wherein the second bearing is located on a side of the rotor, which side is away from the first bearing, along the axial direction; wherein the first bearing and the second bearing are coaxially arranged with each other.
